# FASCICULE DE BREVET EUROPEEN

(11) **EP 1 141 166 B1**
(45) Date de publication et mention de la délivrance du brevet: **11.08.2004**
(21) Numéro de dépôt: 99958186.1
(22) Date de dépôt: 10.12.1999
(51) Int. Cl.: C09K 5/04, C11D 7/50, C23G 5/028, G03C 11/00

(54) **COMPOSITIONS COMPRENANT DU 1,1,1,3,3-PENTAFLUOROBUTANE ET UTILISATION DE CES COMPOSITIONS**
1,1,1,3,3-PENTAFLUORBUTAN ENTHALTENDE ZUSAMMENSETZUNGEN UND DEREN VERWENDUNG
COMPOSITIONS COMPRISING 1,1,1,3,3-PENTAFLUOROBUTANE AND USE OF SAID COMPOSITIONS

(30) Priorité: 12.12.1998 WO PCT/EP98/08160; 12.03.1999 EP 99200762
(43) Date de publication de la demande: 10.10.2001
(73) Titulaire: SOLVAY (Société Anonyme), 1050 Bruxelles (BE)
(72) Inventeur: DOURNEL, Pierre, B-1050 Bruxelles (BE); BARTHELEMY, Pierre, B-1315 Pietrebais (BE)
(74) Mandataire: Jacques, Philippe
(86) Numéro de dépôt international: PCT/EP1999/009798
(87) Numéro de publication internationale: WO 2000/036046

(56) Documents cités:
- EP-A- 0 784 238
- EP-A- 0 851 016
- EP-A- 0 863 194
- WO-A-96/30487
- BE-A- 1 007 543
- DE-A- 19 725 360
- US-A- 5 688 431

## Description

L'invention concerne des compositions comprenant du 1,1,1,3,3-pentafluorobutane et leur utilisation, par exemple comme solvant notamment de séchage ou de dégraissage ou comme agent réfrigérant.

Des accords internationaux visant à protéger la couche d'ozone stratosphérique, imposent de diminuer voire arrêter progressivement l'utilisation de chlorofluorocarbures (CFC) et de hydrochlorofluorocarbures (HCFC). Ce genre de composés est utilisé entre autres, comme solvant ou comme agent réfrigérant. Le CFC-113 par exemple, est utilisé comme solvant de dégraissage ou nettoyage de surfaces. Plus récemment, le HCFC-141b a été utilisé pour ces applications. Ce dernier composé est utilisé également avec des agents tensioactifs, dans des agents de séchage. Le CFC-11 et le HCFC-123 sont utilisés par exemple comme agent réfrigérant dans des turbocompresseurs.

La référence US 5688431 concerne des compositions réfrigérantes à base d'octafluorobutane, et mentionne une composition de 1,1,2,2,3,3,4,4-octafluorobutane avec le 1,1,1,3,3-pentafluorobutane. La référence DE 19725360 concerne des compositions de 1, 1, 1,3,3-pentafluorobutane avec des hydrofluoroalcanes contenant 2 ou 3 atomes de carbone.

Il est connu d'utiliser du 1,1,1,3,3-pentafluorobutane (HFC-365mfc) comme produit de remplacement respectueux de la couche d'ozone dans des applications en tant que solvant. L'utilisation du 1,1,1,3,3-pentafluorobutane requiert cependant des précautions pour tenir compte du caractère inflammable du produit. Il a été proposé d'utiliser du 1,1,1,3,3-pentafluorobutane dans des compositions avec un agent tensioactif spécifique et du pentafluoropropanol ou du tridécafluorooctanol (EP - A - 863194). Ces compositions présentent cependant l'inconvénient d'être limitées quant à la polarité des mélanges possibles. Ceci limite leur capacité à solubiliser des agents tensioactifs. De plus avec le pentafluoropropanol on doit s'attendre à une solubilité accrue dans des milieux semi-aqueux qui n'est pas acceptable pour certaines applications. Le point d'ébullition élevé des alcools fluorés utilisés conduit en outre à un enrichissement de HFC-365mfc dans la phase gazeuse qui rend les vapeurs inflammables. En conséquence, les compositions proposées ne devraient pas être utilisées dans des machines de séchage.

L'invention vise à remédier à ces problèmes.

L'invention a donc pour objet des compositions comprenant du 1,1,1,3,3-pentafluorobutane (HFC-365mfc) et plus de 5 % en poids d'au moins un composé fluoré ininflammable sélectionné parmi les perfluorocarbures, les hydrofluorocarbures comprenant plus de 3 atomes de carbone, les amines fluorées et les éthers fluorés.

Il a été trouvé de manière surprenante que les compositions selon l'invention présentent des bonnes propriétés quant à leur inflammabilité et de bonnes propriétés techniques pour une large gamme d'applications. Le 1,1,1,3,3-pentafluorobutane présente l'avantage particulier d'être miscible avec les composés fluorés ininflammables et d'être compatible avec des additifs ou solvants habituellement utilisés dans des applications telles que mentionnées plus haut.

Par composé fluoré ininflammable ou composition ininflammable on entend désigner tout composé ou composition qui ne présente pas de point d'éclair déterminé selon la Norme ISO 1523.

Les hydrofluorocarbures (HFC) et les perfluorocarbures ininflammables utilisables dans les compositions selon l'invention peuvent être linéaires, ramifiés ou cycliques et contiennent généralement 4, 5, 6, 7, 8, 9 ou 10 atomes de carbone. Parmi les hydrofluorocarbures, ceux comprenant au moins 5 atomes de carbone conviennent bien. Le 1,1,1,2,3,4,4,5,5,5-décafluoropentane (HFC-43-10mee) est particulièrement préféré. Parmi les perfluorocarbures, ceux comprenant au moins 5 atomes de carbone conviennent bien. Le perfluoropentane et le perfluorohexane sont préférés. On met souvent en oeuvre le perfluoropentane et le perfluorohexane sous la forme de mélanges techniques d'isomères tels que commercialisés par exemple par 3M sous les dénominations respectives de PF5050 pour le perfluoropentane et PF5060 pour le perfluorohexane.

Les éthers fluorés et les amines fluorées ininflammables utilisables dans les compositions selon l'invention peuvent être linéaires, ramifiés ou cycliques et contiennent généralement 3, 4, 5, 6, 7, 8, 9 ou 10 atomes de carbone. Parmi les éthers fluorés ceux comprenant au moins 4 atomes de carbone conviennent bien. Le perfluorobutyl-méthyléther est particulièrement préféré. Parmi les amines fluorées, celles comprenant au moins 4 atomes de carbone conviennent bien. La perfluorotriéthylamine est particulièrement préférée.

Généralement les composés fluorés ininflammables présentent un point d'ébullition à 101,3 kPa supérieur ou égal à 15°C. De préférence le point d'ébullition est supérieur ou égal à 20°C. Généralement le point d'ébullition est inférieur ou égal à 130°C à 101,3 kPa. Le plus souvent le point d'ébullition est inférieur ou égal à 100°C. De préférence le point d'ébullition est inférieur ou égal à 85°C.

Le rapport numérique F/H (nombre d'atomes de fluor dans la molécule divisé par le nombre d'atomes d'hydrogène dans la molécule) des composés fluorés ininflammables est supérieur à 2. Un rapport numérique F/H supérieur ou égal à 2,5 convient bien. De préférence le rapport numérique F/H est supérieur ou égal à 3.

La quantité de composés fluorés ininflammables est supérieure à 5 % en poids par rapport au mélange constitué de 1,1,1,3,3-pentafluorobutane et de composés fluorés ininflammables. Souvent on met en oeuvre une quantité supérieure ou égale à 10 % en poids. Une quantité supérieure ou égale à 20 % en poids est préférée. Une quantité supérieure ou égale à 25 % en poids convient bien. Une quantité supérieure ou égale à 30 % en poids donne de bons résultats. De façon particulièrement préférée on emploie une quantité efficace de composé fluoré ininflammable qui rend ininflammable la composition, c'est-à-dire que la composition ne présente pas de point d'éclair déterminé selon la norme ISO 1523. Généralement, la quantité de composés fluorés ininflammables dans les compositions selon l'invention est d'au plus 90 % en poids.

Des compositions préférées selon l'invention comprennent, au titre de composé ininflammable, au moins du perfluoropentane, du perfluorohexane, du perfluorobutyl-méthyléther ou un mélange de ceux-ci. Une variante préférée des compositions selon l'invention concerne des compositions comprenant du 1,1,1,3,3-pentafluorobutane et au moins un perfluorocarbure dans des proportions dans lesquelles ils forment un azéotrope ou un pseudo-azéotrope.

Fondamentalement, l'état thermodynamique d'un fluide est défini par quatre variables interdépendantes : la pression (P), la température (T), la composition de la phase liquide (X) et la composition de la phase gazeuse (Y). Un azéotrope vrai est un système particulier à 2 ou plusieurs composants pour lequel, à une température donnée et à une pression donnée, la composition de la phase liquide X est exactement égale à la composition de la phase gazeuse Y. Un pseudo-azéotrope est un système à 2 ou plusieurs composants pour lequel, à une température donnée et à une pression donnée, X est substantiellement égal à Y. En pratique, cela signifie que les constituants de tels systèmes azéotropiques et pseudo-azéotropiques ne peuvent pas être séparés facilement par distillation et dès lors on n'enrichit pas de composé inflammable dans la phase gazeuse.

Aux fins de la présente invention, on entend par mélange pseudo-azéotropique, un mélange de deux constituants dont le point d'ébullition (à une pression donnée) diffère du point d'ébullition de l'azéotrope vrai de 0,5°C au maximum. Les mélanges dont le point d'ébullition diffère du point d'ébullition de l'azéotrope vrai de 0,2°C au maximum sont préférés. Les mélanges dont le point d'ébullition diffère du point d'ébullition de l'azéotrope vrai de 0,1°C au maximum sont particulièrement préférés.

Le 1,1,1,3,3-pentafluorobutane et le perfluoropentane forment un azéotrope ou un pseudo-azéotrope binaire lorsque leur mélange contient environ de 50 à 87 % en poids de perfluoropentane. Les compositions binaires contenant environ de 50 à 70 % en poids de perfluoropentane sont préférées. Les compositions binaires contenant environ de 50 à 60 % en poids sont particulièrement préférées. Les compositions binaires contenant environ de 65 à 80 % en poids de perfluoropentane sont également préférées. Les compositions binaires contenant environ de 70 à 78 % en poids sont particulièrement préférées. Sous une pression de 100,1 +- 0.2 kPa, la composition binaire constituée essentiellement d'environ 26 % en poids de 1,1,1,3,3-pentafluorobutane et d'environ 74 % en poids de perfluoropentane constitue un azéotrope vrai, dont le point d'ébullition est d'environ 24.4°C.

Le 1,1,1,3,3-pentafluorobutane et le perfluorohexane forment un azéotrope ou un pseudo-azéotrope binaire lorsque leur mélange contient environ de 20 à 60 % en poids de perfluorohexane. Les compositions binaires contenant environ de 25 à 45 % en poids de perfluorohexane sont préférées. Les compositions binaires contenant environ de 32 à 42 % en poids de perfluorohexane sont particulièrement préférées. Les compositions binaires contenant environ de 35 à 40 % en poids de perfluorohexane sont tout particulièrement préférées. Sous une pression de 101,2 +- 0.5 kPa, la composition binaire constituée essentiellement d'environ 64 % en poids de 1,1,1,3,3-pentafluorobutane et d'environ 36 % en poids de perfluorohexane constitue un azéotrope vrai, dont le point d'ébullition est d'environ 36.4 °C. Cette composition est tout particulièrement préférée.

L'invention concerne aussi des compositions comprenant du 1,1,1,3,3-pentafluorobutane, au moins un composé fluoré ininflammable et au moins un solvant organique non fluoré. A titre de composé fluoré ininflammable sont préférés les composés fluorés ininflammables mentionnés plus haut.

A titre de solvant organique non fluoré conviennent bien, par exemple, les hydrocarbures, les hydrocarbures chlorés, les alcools, les esters ou cétones ou les éthers.

A titre de solvant organique non fluoré conviennent aussi les hydrocarbures halogénés et les esters ou cétones aliphatiques, alicycliques ou aromatiques. Les hydrocarbures utilisables dans les compositions selon l'invention peuvent être linéaires, ramifiés ou cycliques et contiennent généralement 3, 4, 5, 6, 7, 8, 9, 10, 11 ou 12 atomes de carbone. Les hydrocarburès comprenant au moins 5 atomes de carbone conviennent bien. De préférence les hydrocarbures comprennent au moins 6 atomes de carbone. Parmi les alcanes ou alcènes, les composés comprenant de 5 à 12 atomes de carbone sont préférés. Le n-hexane ou le n-heptane ou le n-octane conviennent bien. Parmi les hydrocarbures aromatiques sont préférés ceux qui comprennent au moins un substituant alkyl sur un noyau benzénique. Le toluène, le 1,2-xylène, le 1,3-xylène, le 1,4-xylène ou leurs mélanges sont tout particulièrement préférés.

Les hydrocarbures chlorés utilisables dans les compositions selon l'invention peuvent être linéaires, ramifiés ou cycliques et contiennent généralement 1, 2, 3, 4, 5, 6, 7, 8, 9 ou 10 atomes de carbone. Les hydrocarbures chlorés comprenant 1, 2, 3 ou 4 atomes de carbone conviennent bien. De préférence, les hydrocarbures chlorés comprennent 1 ou 2 atomes de carbone. Parmi les alcanes chlorés, le dichlorométhane, le trichlorométhane et le 1,2-dichloréthane sont préférés. Parmi les alcènes chlorés le perchloréthylène et le 1,2-dichloréthylène sont préférés. Le trans-1,2-dichloréthylène est tout particulièrement préféré.

Le 1,2-dichloréthylène présente la propriété de former des mélanges azéotropiques ou pseudo-azéotropiques avec le 1,1,1,3,3-pentafluorobutane, ce qui peut présenter des avantages pour certaines applications. Les mélanges azéotropiques ou pseudo-azéotropiques ainsi que des mélanges azéotropiques ou pseudo-azéotropiques ternaires comprenant en outre un alcanol sont décrits dans le brevet US 5478492 au nom de la demanderesse.

Les alcools utilisables dans les compositions selon l'invention peuvent être linéaires, ramifiés ou cycliques et contiennent généralement 1, 2, 3, 4, 5, 6, 7, 8, 9 ou 10 atomes de carbone. Les alcools comprenant 1, 2, 3, 4 ou 5 atomes de carbone conviennent bien. De préférence les alcools comprennent 1, 2, 3 ou 4 atomes de carbone. Parmi les alcanols, le méthanol, l'éthanol, le n-propanol, l'isopropanol, le n-butanol, l'isobutanol et le tert.-butanol sont préférés: Le méthanol, l'éthanol, l'isopropanol et l'isobutanol donnent de bons résultats. L'isobutanol est tout particulièrement préféré.

Le méthanol présente la propriété de former des mélanges azéotropiques ou pseudo-azéotropiques avec le 1,1,1,3,3-pentafluorobutane, ce qui peut présenter des avantages pour certaines applications. Les mélanges azéotropiques ou pseudo-azéotropiques contiennent de 93 à 99 % en poids de 1,1,1,3,3-pentafluorobutane et de 1 à 7 % de méthanol. L'azéotrope vrai contient environ 96.2 % en poids de 1,1,1,3,3-pentafluorobutane et environ 3.8 % en poids de méthanol.

L'éthanol présente la propriété de former des mélanges azéotropiques ou pseudo-azéotropiques avec le 1,1,1,3,3-pentafluorobutane, ce qui peut présenter des avantages pour certaines applications. Les mélanges azéotropiques ou pseudo-azéotropiques sont décrits dans le brevet US 5445757 au nom de la demanderesse.

Les esters utilisables dans les compositions selon l'invention peuvent être linéaires, ramifiés ou cycliques et contiennent généralement 2, 3, 4, 5, 6, 7, 8, 9 ou 10 atomes de carbone. Les esters comprenant 4, 5, 6, 7, 8 ou 9 atomes de carbone conviennent bien. De préférence les esters sont dérivés d'un acide carboxylique comprenant au moins 2 atomes de carbone. De préférence les esters sont dérivés d'un alcanol sélectionné parmi le groupe constitué de méthanol, éthanol, n-propanol, isopropanol, n-butanol, isobutanol et tert.-butanol. L'acétate d'éthyle, le butyrate d'éthyle et le caproate d'éthyle conviennent bien.

Les cétones utilisables dans les compositions selon l'invention peuvent être linéaires, ramifiés ou cycliques et contiennent généralement 3, 4, 5, 6, 7, 8, 9 ou 10 atomes de carbone. Les cétones comprenant 3, 4, 5, 6, 7 ou 8 atomes de carbone conviennent bien. Parmi les cétones l'acétone, la 2-butanone, les 2- ou 3- pentanones, la méthylisobutylcétone, la diisopropylcétone, la cyclohexanone et l'acétophénone sont préférées. La méthylisobutylcétone est particulièrement préférée.

Les éthers utilisables dans les compositions selon l'invention peuvent être linéaires, ramifiés ou cycliques et contiennent généralement 2, 3, 4, 5, 6, 7, 8, 9 ou 10 atomes de carbone. Les éthers comprenant 4, 5, 6, 7, 8 ou 9 atomes de carbone conviennent bien. Parmi les éthers aliphatiques ou alicycliques, le diéthyléther, le méthyl-isopropyléthèr, le monométhyléther de diéthylèneglycol, le diméthyléther de diéthylèneglycol, le tétrahydrofuranne et le 1,4-dioxanne sont préférés.

Il a été trouvé que les compositions selon l'invention comprenant au moins un solvant organique non fluoré conviennent particulièrement bien pour des applications en tant que solvant de séchage ou dégraissage. Par solvant de séchage on entend les applications dans lesquelles les compositions selon l'invention sont utilisées pour éliminer l'eau présente à la surface d'articles solides. En effet on peut atteindre une grande variété de polarités de solvants différents tout en conservant des avantages quant à l'ininflammabilité des compositions. Tout particulièrement ces compositions permettent d'atteindre des bonnes propriétés de solubilisation d'agents tensioactifs requises, par exemple, pour les solvants de séchage.

On peut mettre en oeuvre des solvants inflammables ou ininflammables. Dans le cas d'un solvant inflammable, on préfère mettre en oeuvre un solvant présentant un point d'éclair supérieur ou égal à 0°C. Plus particulièrement, on préfère un point d'éclair supérieur ou égal à 10°C. Les solvants présentant un point d'éclair supérieur ou égal à 20°C sont tout particulièrement préférés.

Dans le cas d'un solvant organique non fluoré inflammable, on met de préférence en oeuvre une quantité efficace de composé fluoré ininflammable de manière à obtenir une composition selon l'invention ininflammable. Pour les solvants non fluorés ininflammables, le point d'ébullition à 101,3 kPa n'est pas critique. Généralement, les solvants ininflammables présentent un point d'ébullition à 101,3 kPa supérieur ou égal à 15°C. De préférence le point d'ébullition est supérieur ou égal à 20°C. Généralement, le point d'ébullition est inférieur ou égal à 250°C à 101,3 kPa. Le plus souvent, le point d'ébullition est inférieur ou égal à 200°C.

Quand on met en oeuvre un solvant organique non fluoré inflammable, on utilise généralement un solvant présentant un point d'ébullition supérieur ou égal à 30°C. Plus souvent, le point d'ébullition est supérieur ou égal à 40°C. De préférence, le point d'ébullition est supérieur ou égal à 50°C. De façon particulièrement préférée, le point d'ébullition est supérieur ou égal à 60°C. En effet, on évite de la sorte un enrichissement de solvant organique non fluoré inflammable dans la phase gazeuse et en conséquence on évite la formation de mélanges gazeux inflammables.

Selon l'application visée, on peut mettre en oeuvre un solvant organique non fluoré miscible ou non miscible avec l'eau. Conviennent bien par exemple pour une application séchage les solvants essentiellement non miscibles avec l'eau.

La teneur de solvant organique non fluoré dans une composition selon l'invention comprenant du 1,1,1,3,3-pentafluorobutane, au moins un composé fluoré ininflammable et au moins un solvant organique non fluoré peut être choisie en fonction de la polarité et l'inflammabilité souhaitées de la composition. Généralement cette teneur est d'au plus 20 % en poids. De préférence elle est d'au plus 10 % en poids. Lorsqu'un solvant organique non fluoré est présent, sa teneur est généralement d'au moins 1 % en poids. De préférence elle est d'au moins 2 % en poids. Des exemples particuliers des compositions selon l'invention comprennent du 1,1,1,3,3-pentafluorobutane et un solvant organique non fluoré dans des proportions dans lesquelles ils forment un azéotrope ou un pseudo-azéotrope.

Les compositions selon l'invention contiennent éventuellement un agent tensioactif. Tout agent tensioactif bien connu en soi et compatible avec les compositions selon l'invention peut être utilisé. Avantageusement on met en oeuvre l'agent tensioactif avec des compositions selon l'invention comprenant au moins un solvant organique non fluoré, telles que décrites plus haut. En effet ces compositions conviennent particulièrement bien pour atteindre une bonne solubilité de l'agent tensioactif tout en conservant de bonnes propriétés quant à l'ininflammabilité des compositions.

Quelques agents tensioactifs utilisables dans les compositions selon l'invention sont décrits, par exemple dans ULLMANN'S Encyclopedia of Industrial Chemistry, 5^{th} ed., 1987, vol. A8, p. 338-350. On peut mettre en oeuvre des agents tensioactifs cationiques, anioniques, non-ioniques et amphotères. On peut utiliser par exemple des acides gras, des esters gras, des alkylbenzènesulfonates, des alkanesulfonates, des sulfonates d'α-oléfine, des esters d'acides gras α-sulfonés (SES), des sulfates d'alkyle, des sulfates d'éther alkyle, des composés quaternaires d'ammonium, des éthers d'alkyle de polyéthylèneglycol, des éthers phényle de polyéthylèneglycol, les alcanolamides d'acide gras, les éthers polyglycol d'alcool gras, des copolymères-bloc d'oxyde d'éthylène et d'oxyde de propylène, des alkplbétaïnes, des alkylsulfobétaïnes, des sels de tétralkylammonium d'acides mono- ou dialkylphosphoriques ou les agents tensioactifs comprenant au moins un groupement imidazoline. On peut également mettre en oeuvre des agents tensioactifs tels que décrits plus haut contenant au moins un substituant fluor. Plus spécifiquement on peut mettre en oeuvre des agents tensioactifs comprenant au moins une chaîne alkyle polyfluorée ou un substituant aromatique polyfluoré. Dans des compositions selon l'invention utilisables notamment comme agent de séchage, on met en oeuvre, de préférence un agent tensioactif de type imidazoline. De façon particulièrement préférée, l'imidazoline répond à la formule : 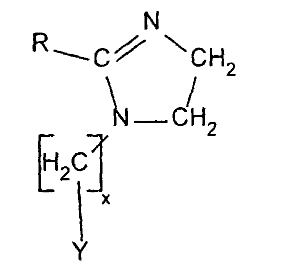 dans laquelle R représente une chaîne alkyle ou alcényle comprenant de 2 à 25 atomes de carbone, Y présente un groupement hydroxyle ou amino et x est un nombre entier de 1 à 20. De préférence x est de 1 à 12. De préférence la chaîne R comprend de 10 à 20 atomes de carbone. Les imidazolines dans lesquelles R représente une chaîne comprenant 11 ou 17 atomes de carbone et x est égal à 2 sont tout particulièrement préférées.

L'imidazoline peut être sous la forme de base libre ou sous la forme de sel, de préférence de mono- ou de di-carboxylate. La partie carboxylate est de préférence dérivée d'un acide gras saturé ou insaturé comprenant de 4 à 22 atomes de carbone. On préfère mettre en oeuvre l'imidazoline sous forme libre ou sous forme de sel de monocarboxylate.

Convient particulièrement bien aussi un agent tensioactif de type alkylbenzènesulfonate. Souvent cet agent tensioactif comprend une chaîne alkyle comprenant de 4 à 22, de préférence de 10 à 14 atomes de carbone. Les sels de dodécylbenzènesulfonate, en particulier les sels d'une amine quaternaire donnent de bons résultats. Le dodécylbenzènesulfonate d'isopropylammonium est particulièrement préféré.

Lorsqu'un agent tensioactif est présent dans une composition selon l'invention, sa teneur est généralement d'au moins 100 ppm (mg/kg). Souvent elle est d'au moins 500 ppm. De préférence elle est d'au moins 1000 ppm. Généralement, la teneur en agent tensioactif est d'au plus 5000 ppm. Souvent elle est d'au plus 4000 ppm. De préférence elle est d'au plus 3000 ppm. Lorsqu'on met en oeuvre un agent tensioactif de type imidazoline tel que décrit plus haut, sa teneur particulièrement préférée est d'environ 2000 ppm. Le tableau ci-après reprend de manière non limitative quelques compositions préférées selon l'invention.

**Tableau 1**

| No. | Teneur en HFC-365mfc (% en poids) | Teneur en perfluorohexane (% en poids) | Teneur en HFC-43-10mee (% en poids) | Teneur en HFE-7100 (% en poids) | Solvant organique non fluoré (% en poids) |
|---|---|---|---|---|---|
| 1 | 30-60 | - | 40-70 | - | - |
| 2 | 15-45 | - | - | 55-85 | - |
| 3 | 30-49 | 49-60 | - | - | Acétate d'éthyle 2-10 |
| 4 | 30-49 | - | 49-60 | - | Acétate d'éthyle 2-10 |
| 5 | 25-38 | - | - | 60-68 | Isopropanol 2-5 |
| 6 | 55-63 | 35-45 | - | - | Acétate d'éthyle 2-10 |
| 7 | 40-50 | - | - | 50-60 | - |

Les compositions selon l'invention peuvent être utilisées, par exemple, dans des applications solvant, comme agent de séchage, comme solvant de dégraissage ou comme agent de fixation de toners. On peut aussi utiliser les compositions selon l'invention comme réfrigérant ou fluide caloporteur.

Un agent de séchage est mis en oeuvre, par exemple, en industrie électronique, électromécanique ou éventuellement cosmétique lorsqu'on veut éliminer l'eau adsorbée sur une surface solide d'un objet après un traitement aqueux. Le traitement aqueux peut consister, par exemple en une opération de nettoyage, éventuellement en présence d'un surfactant. Généralement on immerge l'objet après le traitement aqueux dans un agent de séchage à l'état d'ébullition comprenant un agent tensioactif, puis on élimine l'agent tensioactif qui adhère à la surface de l'objet dans un bain de lavage. Les compositions selon l'invention comprenant un agent tensioactif conviennent bien pour l'opération de séchage. Les compositions selon l'invention exemptes d'agent tensioactif conviennent bien pour le bain de layage destiné à éliminer l'agent tensioactif.

Un solvant de dégraissage est utilisé, par exemple, en industrie électronique ou électromécanique pour éliminer la graisse adsorbée notamment sur des pièces métalliques usinées avec de la graisse. Généralement, on immerge une pièce à dégraisser dans un bain de solvant de dégraissage à l'état d'ébullition. Conviennent particulièrement bien à titre de solvant de dégraissage, les compositions selon l'invention comprenant un solvant organique non fluoré de polarité élevée, tels que les alcanols, en particulier le méthanol ou l'éthanol et/ou celles qui comprennent un hydrocarbure chloré.

Un agent de fixation de toner sert à fixer des particules de toner sur un support. Des particules de toner comprennent généralement un polymère et un pigment. Lors d'une impression électrophotographique, les particules sont attirées sur l'image électrostatique imprimée sur le support par des forces électrostatiques. L'agent de fixation de toner sert à ramollir le polymère, qui assure dès lors une adhésion permanente des particules sur le support. On met en oeuvre l'agent de fixation de toners sous la forme de vapeurs, générées habituellement par vaporisation de gouttes de solvant sur, par exemple une plaque chauffante. Conviennent bien pour cette application les compositions ininflammables selon l'invention présentant un bon pouvoir de solvant de polymère.

Les compositions ininflammables selon l'invention peuvent être utilisées avantageusement comme agent de séchage dans une machine de séchage ou comme agent de fixation de toner dans une imprimante laser industrielle.

Les compositions selon l'invention conviennent bien également comme fluide réfrigérant, en particulier comme produit de remplacement du CFC-11 (trichlorofluorométhane) ou comme produit de remplacement du CFC-113 (1,1,2-trichlorotrifluoroéthane), notamment pour les applications avec un turbocompresseur. Les turbocompresseurs sont utilisés surtout lorsque l'on veut disposer de productions frigorifiques importantes pour des installations de conditionnement d'air par exemple ou pour l'industrie de procédés. Des informations concernant l'application réfrigération, fluide caloporteur et la réfrigération avec un turbocompresseur sont contenues, par exemple, dans ULLMANN'S Encyclopedia of Industrial Chemistry, 5^{th} ed., 1988, vol. B3, p. 19-2 à 19-39. Conviennent particulièrement bien pour cette application les compositions constituées essentiellement de 1,1,1,3,3-pentafluorobutane et d'un ou plusieurs composés fluorés ininflammables sélectionnés parmi le perfluorohexane, le perfluoropentane et le perfluorobutyl-méthyléther. spécialement si ces compositions sont azéotropiques ou pseudo-azéotropiques.

Conviennent bien pour l'utilisation comme produit de remplacement du CFC-11 dans les applications réfrigérant ou fluide caloporteur les compositions selon l'invention comprenant du 1,1,1,3,3-pentafluorobutane et du perfluoropentane, en particulier celles contenant ou étant constituées de 10 à 90 % en poids de HFC-365mfc et de 90 à 10 % en poids de perfluoropentane. Une composition préférée pour cette application est constituée de 25 à 30 % en poids de HFC-365mfc et de 75 à 70 % en poids de perfluoropentane. Une composition contenant de 27,0 à 27,2 % en poids de 1,1,1,3,3-pentafluorobutane et de 72,8 à 73,0 % de perfluoropentane est tout particulièrement préférée.

Conviennent bien pour l'utilisation comme produit de remplacement du CFC-113 dans les applications réfrigérant ou fluide caloporteur les compositions selon l'invention comprenant du 1,1,1,3,3-pentafluorobutane et du perfluorohexane, en particulier celles contenant ou étant constituées de 10 à 90 % en poids de HFC-365mfc et de 90 à 10 % en poids de perfluorohexane; celles comprenant du 1,1,1,3,3-pentafluorobutane et du perfluorobutyl-méthyléther, en particulier celles contenant ou étant constituées de 10 à 90 % en poids de HFC-365mfc et de 90 à 10 % en poids de perfluorobutyl-méthyléther; et celles comprenant du 1,1,1,3,3-pentafluorobutane, du perfluorohexane et du perfluorobutyl-méthyléther. Une composition préférée pour cette application est constituée de 60 à 65 % en poids de HFC-365mfc et de 40 à 35 % en poids de perfluorohexane. Une composition contenant de 61,0 à 62,0 % en poids de 1,1,1,3,3-pentafluorobutane et de 38,0 à 39,0 % de perfluorohexane convient particulièrement bien pour cette application. Une autre composition préférée pour cette application est constituée de 40 à 60 % en poids de HFC-365mfc et de 60 à 40 % en poids de perfluorobutyl-méthyléther.

Les exemples donnés ci-après entendent illustrer l'invention sans toutefois la limiter.

### Exemples 1 et 2

Azéotropes HFC-365mfc/perfluorohexane, HFC-3 65mfc/perfluoropentane.

Pour mettre en évidence l'existence de compositions azéotropiques ou pseudo-azéotropiques selon l'invention entre le 1,1,1,3,3 pentafluorobutane et le perfluoropentane ou le perfluorohexane, on a utilisé un appareillage en verre constitué d'un flacon bouilleur de 50 ml surmonté d'un condenseur à reflux. La température du liquide a été mesurée au moyen d'un thermomètre plongeant dans le flacon.

Une quantité de 1,1,1,3,3 pentafluorobutane pur déterminée avec précision a été chauffée sous une pression connue jusqu'à ébullition, puis de petites quantités de perfluorocarbure, pesées avec précision, ont été progressivement introduites dans le flacon au moyen d'une seringue, via une tubulure latérale.

La détermination des compositions pseudo-azéotropiques a été réalisée par un relevé de l'évolution de la température d'ébullition du mélange en fonction de sa composition.

Ces mesures ont été réalisées pour des mélanges contenant du 1,1,1,3,3-pentafluorobutane et des quantités croissantes de perfluorohexane (exemple 1), de ou de perfluoropentane (exemple 2),

La pression à laquelle les mesures ont été prises est mentionnée. L'évolution de la température d'ébullition des différentes compositions en fonction de leur teneur en perfluorocarbure, exprimée en % poids, est présentée dans le tableau 2.

**Tableau 2**

| Pression : 100,1 +- 0,2 kPa | | |
|---|---|---|
| HFC-365mfc % en poids | Perfluoropentane PF5050 % en poids | Température °C |
| 100.00 % | 0.00 % | 39.8 |
| 93.77 % | 6.23 % | 34 |
| 91.93 % | 8.07 % | 32.2 |
| 90.05 % | 9.95 % | 31 |
| 88.20 % | 11.80 % | 30 |
| 86.40 % | 13.60 % | 29.6 |
| 83.54 % | 16.46 % | 29 |
| 80.75 % | 19.25 % | 28.4 |
| 78.14 % | 21.86 % | 28 |
| 74.70 % | 25.30 % | 27.6 |
| 71.38 % | 28.62 % | 27.2 |
| 67.70 % | 32.30 % | 26.6 |
| 62.95 % | 37.05 % | 26 |
| 57.25 % | 42.75 % | 25.6 |
| 52.57 % | 47.43 % | 25.2 |
| 50.63 % | 49.37 % | 25.2 |
| 45.07 % | 54.93 % | 25 |
| 40.19 % | 59.81 % | 24.8 |
| 38.46 % | 61.54 % | 24.6 |
| 31.07 % | 68.93 % | 24.4 |
| 25.99 % | 74.01 % | 24.4 |
| 22.92 % | 77.08 % | 24.4 |
| 20.18 % | 79.82 % | 24.4 |
| 17.61 % | 82.39 % | 24.8 |
| 15.44 % | 84.56 % | 24.8 |
| 13.28 % | 86.72 % | 24.8 |
| 11.31 % | 88.69 % | 25.2 |
| 9.41 % | 90.59 % | 25.8 |
| 7.31 % | 92.69 % | 26.4 |
| 5.28 % | 94.72 % | 27.4 |
| 3.49 % | 96.51 % | 28.4 |
| 2.45 % | 97.55 % | 29.2 |
| 0.00 % | 100.00 % | 29.6 |

**Tableau 3**

| Pression: 101,2 +- 0.5 kPa | | |
|---|---|---|
| HFC-365mfc % en poids | Perfluorohexane PF5060 % en poids | Température °C |
| 100.00 % | 0.00 % | 40 |
| 94.61 % | 5.39 % | 38.8 |
| 93.31 % | 6.69 % | 38.6 |
| 91.81 % | 8.19 % | 38.4 |
| 90.23 % | 9.77 % | 38 |
| 88.33 % | 11.67 % | 37.8 |
| 86.06 % | 13.94 % | 37.6 |
| 83.69 % | 16.31 % | 37.4 |
| 80.81 % | 19.19 % | 37 |
| 76.52 % | 23.48 % | 36.8 |
| 71.60 % | 28.40 % | 36.6 |
| 66.96 % | 33.04 % | 36.4 |
| 60.88 % | 39.12 % | 36.4 |
| 53.48 % | 46.52 % | 36.4 |
| 47.09 % | 52.91 % | 36.6 |
| 43.65 % | 56.35 % | 37 |
| 42.05 % | 57.95 % | 36.8 |
| 36.42 % | 63.58 % | 37.6 |
| 29.55 % | 70.45 % | 38.2 |
| 26.12 % | 73.88 % | 38.8 |
| 23.01 % | 76.99 % | 39.2 |
| 20.59 % | 79.41 % | 39.8 |
| 18.56% | 81.44% | 40.4 |
| 16.61 % | 83.39 % | 41.2 |
| 14.77 % | 85.23 % | 42.4 |
| 13.09 % | 86.91 % | 43.6 |
| 11.43 % | 88.57 % | 44.4 |
| 9.80 % | 90.20 % | 45.6 |
| 8.43 % | 91.57 % | 46.8 |
| 7.18 % | 92.82 % | 48 |
| 5.90 % | 94.10 % | 49.6 |
| 4.63 % | 95.37 % | 51.2 |
| 3.44 % | 96.56 % | 53.2 |
| 2.32 % | 97.68 % | 54.4 |
| 1.16% | 98.84 % | 56.4 |
| 0.00 % | 100.00 % | 57.2 |

Les mélanges azéotropiques ou pseudo-azéotropiques HFC-365mfc/perfluorohexane ou HFC-365mfc/perfluoropentane sont ininflammables.

### Exemple 3

On a préparé une composition selon l'invention contenant 50 parts en poids de HFC-365mfc, 50 parts en poids de perfluorohexane PF-5060 et 10 parts en poids d'acétate d'éthyle. La composition a été homogène. Elle a été soumise au test selon la norme ISO 1523. La composition n'a pas présenté de point d'éclair.

### Exemple 4

Une composition selon l'invention contenant 40 parts en poids de HFC-365mfc, 60 parts en poids de perfluorobutyléther HFE-7100 et 5 parts en poids d'isopropanol, a été soumise au test selon la norme ISO 1523. La composition n'a pas présenté de point d'éclair.

### Exemple 5

Solubilité de l'agent tensioactif IMIDAZOLINE 18NH (N-(2-aminoéthyl)-2-n-octadécylimidazoline) dans des mélanges ternaires

On a dissous 0.026g de IMIDAZOLINE 18NH dans 2 g de Xylène (mélange technique d'isomères) et on a ajouté 20 g d'un mélange contenant 13 g de HFC-365mfc et 7 g de perfluorohexane. La solution homogène obtenue contient 1182ppm de IMIDAZOLINE 18NH. On a soumis cette solution à un test rapide d'inflammabilité en essayant de mettre le feu à la solution à température ambiante à l'aide d'une allumette. La solution n'a pas pris feu.

### Exemple 6

On a procédé comme dans l'exemple 5 en remplaçant le xylène par la même quantité de toluène. La solution homogène obtenue contient 1182ppm de IMIDAZOLINE 18NH. La solution n'a pas pris feu dans le test décrit dans l'exemple 5.

### Exemple 7

On a dissous 0.022 g de IMIDAZOLINE 18NH dans 1 g de Isobutanol et on a ajouté 20 g d'un mélange contenant 13 g de HFC-365mfc et 7 g de perfluorohexane. La solution homogène obtenue contient 1048 ppm de IMIDAZOLINE 18NH. La solution n'a pas pris feu dans le test décrit dans l'exemple 5.

### Exemple 8

Une plaque en PVDF de géométrie rectilinéaire avec une hauteur de 10 cm, une largeur de 2 cm et une épaisseur de 1 cm percée en direction de l'épaisseur de 20 trous de diamètre de 2 mm a été immergée dans de l'eau afin de boucher tous les trous.

La plaque a été plongée pendant 15 s dans une solution de séchage à l'état d'ébullition, contenant du HFC-365mfc (65 parts en poids), du perfluorohexane PF-5060 (35 parts en poids), de l'isobutanol (5 parts en poids) et 1610 ppm de IMIDAZOLINE 18NH obtenue de manière analogue à l'exemple 5. La plaque est retirée et séchée pendant 2 min à l'air. L'opération plongée/séchage est répétée 4 fois correspondant à une durée totale de plongée de 60 s. A la fin de ce traitement tous les trous étaient exempts d'eau.

### Exemple 9

On a procédé comme dans l'exemple 8 en utilisant une solution de séchage contenant 40 parts en poids de HFC365mfc, 60 parts en poids de perfluorobutyléther HFE-7100, 5 parts en poids d'isobutanol et 2000 ppm de IMIDAZOLINE 18NH. Après une durée de plongée totale de 60 s, 19 sur 20 trous étaient exempts d'eau.

### Exemple 10

On a procédé comme dans l'exemple 8 en utilisant une solution de séchage contenant 36.4 parts en poids de HFC365mfc, 54.5 parts en poids de perfluorobutyléther HFE-7100, 9.1 parts en poids d'isobutanol et 2500 ppm de dodécylbenzènesulfonate d'isopropylammonium. Après une durée de plongée totale de 60 s, tous les trous étaient exempts d'eau.

## Revendications (Revendications pour l'(les) Etat(s) contractant(s) suivant(s): AT, BE, CH, LI, CY, DK, FI, GR, IE, LU, MC, NL, PT, SE)

1. Compositions comprenant du 1,1,1,3,3-pentafluorobutane et plus de 5% en poids d'au moins un composé fluoré ininflammable qui ne présente pas de point d'éclair déterminé selon la norme ISO 1523, sélectionné parmi les hydrofluorocarbures comprenant au moins 5 atomes de carbone, les perfluorocarbures, les amines fluorées et les éthers fluorées.

2. Compositions selon la revendication 1 comprenant en outre au moins un solvant organique non fluoré.

3. Compositions selon la revendication 2 dans lesquelles le solvant organique non fluoré est sélectionné parmi les hydrocarbures.

4. Compositions selon la revendication 3 dans lesquelles les hydrocarbures sont choisis parmi les alcanes ou alcènes comprenant de 5 à 12 atomes de carbone.

5. Compositions selon la revendication 2 dans lesquelles le solvant organique non fluoré est sélectionné parmi les hydrocarbures halogénés.

6. Compositions selon la revendication 5 dans lesquelles les hydrocarbures halogénés sont des alcanes chlorés choisis parmi le dichlorométhane, le trichlorométhane et le 1,2-dichloroéthane.

7. Compositions selon la revendication 5 dans lesquelles l'hydrocarbure halogéné est le trans-1,2-dichloroéthylène.

8. Compositions selon la revendication 2 dans lesquelles le solvant organique non fluoré est sélectionné parmi les esters ou cétones aliphatiques; alicycliques ou aromatiques.

9. Compositions selon la revendication 8 dans lesquelles le solvant organique non fluoré est choisi parmi l'acétate d'éthyle, le butyrate d'éthyle et le caproate d'éthyle

10. Compositions selon la revendication 8 dans lesquelles le solvant organique non fluoré est choisi parmi l'acétone, la 2-butanone, les 2- ou 3-pentanones, la méthylisobutylcétone, la diisopropylcétone, la cyclohexanone et l'acétophénone.

11. Compositions selon la revendication 2 dans lesquelles le solvant organique non fluoré est sélectionné parmi les alcools.

12. Compositions selon la revendication 11 dans lesquelles les alcools sont des alcanol choisis parmi le méthanol, l'éthanol, le n-propanol, l'isopropanol, le n-butanol, l'isobutanol et le tert.-butanol.

13. Compositions selon la revendication 12 dans lesquelles l'alcanol est l'isobutanol.

14. Compositions selon la revendication 2 dans lesquelles le solvant organique non fluoré est sélectionné parmi les éthers.

15. Compositions selon la revendication 14 dans lesquelles les éthers sont choisis parmi les éthers aliphatiques ou alicycliques sélectionnés parmi le diéthyléther, le méthyl-isopropyléthér, le monométhyléther de diéthylèneglycol, le diméthyléther de diéthylèneglycol, le tétrahydrofuranne et le 1,4-dioxanne.

16. Compositions selon l'une quelconque des revendications 2 à 15, comprenant de 1 à 20% en poids de solvant organique non fluoré.

17. Compositions selon la revendication 16, comprenant de 2 à 10 % en poids de solvant organique non fluoré.

18. Compositions selon l'une quelconque des revendications 1 à 17, dans lesquelles le composé fluoré ininflammable est sélectionné parmi les hydrofluorocarbures linéaries, ramifiés ou cycliques comprenant 5, 6, 7, 8, 9 ou 10 atomes de carbone.

19. Compositions selon la revendication 18, comprenant du 1,1,1,2,3,4,4,5,5,5-décafluoropentane (HFC-43-10mee) à titre de composé fluoré ininflammable.

20. Compositions selon la revendication 19, comprenant de 40 à 70% en poids de 1,1,1,2,3,4,4,5,5,5-décafluoropentane.

21. Compositions selon l'une quelconque des revendications 1 à 17, dans lesquelles le composé fluoré ininflammable est sélectionné parmi les éthers fluorés et les amines fluorées ininflammables linéaires, ramifiés ou cycliques et contenant 3, 4, 5, 6, 7, 8, 9 ou 10 atomes de carbone.

22. Compositions selon la revendication 21, comprenant du perfluorobutyl-méthyl éther à titre de composé fluoré ininflammable.

23. Compositions selon la revendication 22, comprenant de 55 à 85% ou de 50 à 60% en poids de perfluorobutyl-méthyl éther.

24. Compositions selon l'une quelconque des revendications 1 à 17, dans lesquelles le composé fluoré ininflammable est sélectionné parmi les perfluorocarbures contenant 4, 5, 6, 7, 8, 9 ou 10 atomes de carbone.

25. Compositions selon la revendication 24, comprenant du perfluoropentane ou du perfluorohexane à titre de composé fluoré ininflammable.

26. Compositions selon la revendication 25 comprenant du 1,1,1,3,3-pentafluorobutane et au moins un perfluorocarbure choisi parmi le perfluorohexane et le perfluoropentane dans des proportions dans lesquelles ils forment un azéotrope ou un pseudo-azéotrope, ledit azéotrope ou pseudo-azéotrope étant constitué essentiellement de 40 à 80 % en poids de 1,1,1,3,3-pentafluorobutane et de 20 à 60 % en poids de perfluorohexane ou de 13 à 50 % en poids de 1,1,1,3,3-pentafluorobutane et de 50 à 87 % en poids de perfluoropentane.

27. Compositions selon l'une quelconque des revendications 1 à 26, contenant du composé fluoré ininflammable en quantité telle que ladite composition ne présente pas de point d'éclair déterminé selon la norme ISO 1523.

28. Compositions selon l'une quelconque des revendications 1 à 27, comprenant en outre un agent tensioactif.

29. Utilisation des compositions selon l'une quelconque des revendications 1 à 28, dans des applications solvant, agent de séchage, solvant de dégraissage ou agent de fixation de toners.

30. Utilisation des compositions selon l'une quelconque des revendications 1 à 28, dans des applications réfrigérant ou fluide caloporteur.

31. Utilisation selon la revendication 29 ou 30 comme produit de remplacement du CFC-11 (trichlorofluorométhane) ou comme produit de remplacement du CFC-113 (1,1,2-trichlorotrifluoroéthane).

## Revendications (Revendications pour l'(les) Etat(s) contractant(s) suivant(s): DE, FR, GB, IT)

1. Compositions comprenant du 1,1,1,3,3-pentafluorobutane et plus de 5% en poids d'au moins un composé fluoré ininflammable qui ne présente pas de point d'éclair déterminé selon la norme ISO 1523, sélectionné parmi les hydrofluorocarbures comprenant au moins 5 atomes de carbone, les perfluorocarbures, les amines fluorées et les éthers fluorées à l'exception
(1) des compositions azéotropiques ou quasi-azéotropiques comprenant jusqu'à 25% en poids de 1,1,1,2,3,4,4,5,5,5-décafluoropentane et au moins 75% en poids de 1,1,1,3,3-pentafluorobutane, ne présentant pas de point éclair déterminé selon la norme ASTM D 3828;
(2) d'une composition constituée de 50% en poids de 1,1,1,2,3,4,4,5,5,5-décafluoropentane et de 50% en poids de 1,1,1,3,3-pentafluorobutane;
(3) d'une composition constituée de 40% en poids de 1,1,1,2,3,4,4,5,5,5-décafluoropentane 40% en poids de 1,1,1,3,3-pentafluorobutane et de 20% en poids de méthanol;
(4) de compositions constituées essentiellement de jusqu'à 99% en poids de difluorométhoxy-(bisdifluorométhyl éther) et d'au moins 1% en poids de 1,1,1,3,3-pentafluorobutane;
(5) de compositions constituées essentiellement de jusqu'à 99% en poids de difluorométhoxy-(bisdifluorométhyl éther) et d'au moins 1% en poids de 1,1,1,3,3-pentafluorobutane dans lesquelles jusqu'à 40% en poids de difluorométhoxy-(bisdifluorométhyl éther) peut être substitué par du 1-difluorométhoxy-1,1,2,2-tétrafluoroéthyl-difluorométhyl éther;
(6) de compositions constituées essentiellement jusqu'à 64% en poids de difluorométhoxy-(bisdifluorométhyl éther), d'au moins 1% en poids de 1,1,1,3,3-pentafluorobutane et de 1 à 35% d'un hydrocarbure;
(7) de compositions constituées essentiellement jusqu'à 89% en poids de difluorométhoxy-(bisdifluorométhyl éther), d'au moins 1% en poids de 1,1,1,3,3-pentafluorobutane et de 1 à 10% en poids d'un alcool.

2. Compositions comprenant du 1,1,1,3,3-pentafluorobutane et plus de 5% en poids d'au moins un composé fluoré ininflammable qui ne présente pas de point d'éclair déterminé selon la norme ISO 1523, sélectionné parmi les hydrofluorocarbures comprenant au moins 5 atomes de carbone, les perfluorocarbures, les amines fluorées et les éthers fluorées avec le proviso que lorsque le composé fluoré ininflammable est le 1,1,1,2,3,4,4,5,5,5-décafluoropentane, sa teneur dans la composition est supérieure à 25% en poids et à l'exception
(1) d'une composition constituée de 50% en poids de 1,1,1,2,3,4,4,5,5,5-décafluoropentane et de 50% en poids de 1,1,1,3,3-pentafluorobutane;
(2) d'une composition constituée de 40% en poids de 1,1,1,2,3,4,4,5,5,5-décafluoropentane 40% en poids de 1,1,1,3,3-pentafluorobutane et de 20% en poids de méthanol;
(3) de compositions constituées essentiellement jusqu'à 99% en poids de difluorométhoxy-(bisdifluorométhyl éther) et d'au moins 1% en poids de 1,1,1,3,3-pentafluorobutane;
(4) de compositions constituées essentiellement jusqu'à 99% en poids de difluorométhoxy-(bisdifluorométhyl éther) et d'au moins 1% en poids de 1,1,1,3,3-pentafluorobutane, dans lesquelles jusqu'à 40% en poids du difluorométhoxy-(bisdifluorométhyl éther) est substitué par du 1-difluorométhoxy-1,1,2,2-tétrafluoroéthyl-difluorométhyl éther;
(5) de compositions constituées essentiellement de jusqu'à 64% en poids de difluorométhoxy-(bisdifluorométhyl éther), d'au moins 1% en poids de 1,1,1,3,3-pentafluorobutane et de 1 à 35% d'un hydrocarbure;
(6) de compositions constituées essentiellement jusqu'à 89% en poids de difluorométhoxy-(bisdifluorométhyl éther), d'au moins 1% en poids de 1,1,1,3,3-pentafluorobutane et de 1 à 10% en poids d'un alcool.

3. Compositions selon la revendication 1 ou 2 comprenant en outre au moins un solvant organique non fluoré.

4. Compositions comprenant
(a) du 1,1,1,3,3-pentafluorobutane;
(b) plus de 5% en poids d'au moins un composé fluoré ininflammable qui ne présente pas de point d'éclair déterminé selon la norme ISO 1523, sélectionné parmi les hydrofluorocarbures comprenant au moins 5 atomes de carbone, les perfluorocarbures, les amines fluorées et les éthers fluorées et
(c) en outre un solvant organique non-fluoré sélectionné parmi les hydrocarbures contenant 3, 4, 6, 7, 8, 9, 10, 11 ou 12 atomes de carbone, les hydrocarbures halogénés, les esters ou cétones aliphatiques, alicycliques ou aromatiques, les alcools comprenant 2, 3, 4, 5, 6, 7, 8, 9 ou 10 atomes de carbone ou les éthers linéaires ou ramifiés comprenant 4, 5, 6, 7, 8 ou 9 atomes de carbone ou les éthers cycliques comprenant 5, 6, 7, 8 ou 9 atomes de carbone ou le tétrahydrofuranne.

5. Compositions selon la revendication 3 ou 4 dans lesquelles le solvant organique non fluoré est sélectionné parmi les hydrocarbures contenant 3, 4, 6, 7, 8, 9, 10, 11 ou 12 atomes de carbone.

6. Compositions selon la revendication 5 dans lesquelles les hydrocarbures sont choisis parmi les alcanes contenant 6, 7, 8, 9, 10, 11 ou 12 atomes de carbone.

7. Compositions selon la revendication 3 ou 4 dans lesquelles le solvant organique non fluoré est sélectionné parmi les hydrocarbures halogénés.

8. Compositions selon la revendication 7 dans lesquelles les hydrocarbures halogénés sont des alcanes chlorés choisis parmi le dichlorométhane, le trichlorométhane et le 1,2-dichloroéthane.

9. Compositions selon la revendication 7 dans lesquelles l'hydrocarbure halogéné est le trans-1,2-dichloroéthylène.

10. Compositions selon la revendication 3 ou 4 dans lesquelles le solvant organique non fluoré est sélectionné parmi les esters ou cétones aliphatiques, alicycliques ou aromatiques.

11. Compositions selon la revendication 10 dans lesquelles le solvant organique non fluoré est choisi parmi l'acétate d'éthyle, le butyrate d'éthyle et le caproate d'éthyle.

12. Compositions selon la revendication 10 dans lesquelles le solvant organique non fluoré est choisi parmi l'acétone, la 2-butanone, les 2- ou 3-pentanones, la méthylisobutylcétone, la diisopropylcétone, la cyclohexanone et l'acétophénone.

13. Compositions selon la revendication 3 dans lesquelles le solvant organique non fluoré est sélectionné parmi les alcools.

14. Compositions selon la revendication 13 dans lesquelles les alcools sont des alcanols choisis parmi le méthanol, l'éthanol, le n-propanol, l'isopropanol, le n-butanol, l'isobutanol et le tert.-butanol.

15. Compositions selon la revendication 4, dans lesquelles les alcools sont des alcanols choisis parmi le l'éthanol, le n-propanol, l'isopropanol, le n-butanol, l'isobutanol et le tert.-butanol.

16. Compositions selon la revendication 14 ou 15 dans lesquelles l'alcanol est l'isobutanol.

17. Compositions selon la revendication 3 ou 4 dans lesquelles le solvant organique non fluoré est choisi parmi les éthers aliphatiques ou alicycliques sélectionnés parmi le diéthyléther, le méthyl-isopropyléther, le monométhyléther de diéthylèneglycol, le diméthyléther de diéthylèneglycol et le tétrahydrofuranne.

18. Compositions selon l'une quelconque des revendications 3 à 17, comprenant de 1 à 20% en poids de solvant organique non fluoré.

19. Compositions selon la revendication 18, comprenant de 2 à 10 % en poids de solvant organique non fluoré.

20. Compositions selon l'une quelconque des revendications 1 à 19, dans lesquelles le composé fluoré ininflammable est sélectionné parmi les hydrofluorocarbures linéaries, ramifiés ou cycliques comprenant 5, 6, 7, 8, 9 ou 10 atomes de carbone.

21. Compositions selon la revendication 20, comprenant du 1,1,1,2,3,4,4,5,5,5-décafluoropentane (HFC-43-10mee) à titre de composé fluoré ininflammable.

22. Compositions selon la revendication 21, comprenant de 40 à 70% en poids de 1,1,1,2,3,4,4,5,5,5-décafluoropentane.

23. Compositions selon l'une quelconque des revendications 1 à 19, dans lesquelles le composé fluoré ininflammable est sélectionné parmi les éthers fluorés et les amines fluorées ininflammables linéaires, ramifiés ou cycliques et contenant 3, 4, 5, 6, 7, 8, 9 ou 10 atomes de carbone.

24. Compositions selon la revendication 23, comprenant du perfluorobutyl-méthyl éther à titre de composé fluoré ininflammable.

25. Compositions selon la revendication 24, comprenant de 55 à 85% ou de 50 à 60% en poids de perfluorobutyl-méthyl éther.

26. Compositions selon l'une quelconque des revendications 1 à 19, dans lesquelles le composé fluoré ininflammable est sélectionné parmi les perfluorocarbures contenant 4, 5, 6, 7, 8, 9 ou 10 atomes de carbone.

27. Compositions selon la revendication 26, comprenant du perfluoropentane ou du perfluorohexane à titre de composé fluoré ininflammable.

28. Compositions selon la revendication 27 comprenant du 1,1,1,3,3-pentafluorobutane et au moins un perfluorocarbure choisi parmi le perfluorohexane et le perfluoropentane dans des proportions dans lesquelles ils forment un azéotrope ou un pseudo-azéotrope, ledit azéotrope ou pseudo-azéotrope étant constitué essentiellement de 40 à 80 % en poids de 1,1,1,3,3-pentafluorobutane et de 20 à 60 % en poids de perfluorohexane ou de 13 à 50 % en poids de 1,1,1,3,3-pentafluorobutane et de 50 à 87 % en poids de perfluoropentane.

29. Compositions selon l'une quelconque des revendications 1 à 28, contenant du composé fluoré ininflammable en quantité telle que ladite composition ne présente pas de point d'éclair déterminé selon la norme ISO 1523.

30. Compositions selon l'une quelconque des revendications 1 à 29, comprenant en outre un agent tensioactif.

31. Utilisation des compositions selon l'une quelconque des revendications 1 à 30, dans des applications solvant, agent de séchage, solvant de dégraissage ou agent de fixation de toners.

32. Utilisation des compositions selon l'une quelconque des revendications 1 à 30, dans des applications réfrigérant ou fluide caloporteur.

33. Utilisation selon la revendication 31 ou 32 comme produit de remplacement du CFC-11 (trichlorofluorométhane) ou comme produit de remplacement du CFC-113 (1,1,2-trichlorotrifluoroéthane).

34. Utilisation d'une composition comprenant du 1,1,1,3,3-pentafluorobutane et plus de 25% en poids de 1,1,1,2,3,4,4,5,5,5-décafluoropentane comme solvant.

35. Utilisation selon la revendication 34, dans laquelle la teneur en 1,1,1,2,3,4,4,5,5,5-décafluoropentane dans la composition est de 40% à 70% en poids

## Revendications (Revendications pour l'(les) Etat(s) contractant(s) suivant(s): ES)

1. Compositions comprenant du 1,1,1,3,3-pentafluorobutane et plus de 5% en poids d'au moins un composé fluoré ininflammable qui ne présente pas de point d'éclair déterminé selon la norme ISO 1523, sélectionné parmi les hydrofluorocarbures comprenant au moins 5 atomes de carbone, les perfluorocarbures, les amines fluorées et les éthers fluorées à l'exception
(1) des compositions azéotropiques ou quasi-azéotropiques comprenant jusqu'à 25% en poids de 1,1,1,2,3,4,4,5,5,5-décafluoropentane et au moins 75% en poids de 1,1,1,3,3-pentafluorobutane, ne présentant pas de point éclair déterminé selon la norme ASTM D 3828;
(2) d'une composition constituée de 50% en poids de 1,1,1,2,3,4,4,5,5,5-décafluoropentane et de 50% en poids de 1,1,1,3,3-pentafluorobutane;
(3) d'une composition constituée de 40% en poids de 1,1,1,2,3,4,4,5,5,5-décafluoropentane 40% en poids de 1,1,1,3,3-pentafluorobutane et de 20% en poids de méthanol.

2. Compositions comprenant du 1,1,1,3,3-pentafluorobutane et plus de 5% en poids d'au moins un composé fluoré ininflammable qui ne présente pas de point d'éclair déterminé selon la norme ISO 1523, sélectionné parmi les hydrofluorocarbures comprenant au moins 5 atomes de carbone, les perfluorocarbures, les amines fluorées et les éthers fluorées avec le proviso que lorsque le composé fluoré ininflammable est le 1,1,1,2,3,4,4,5,5,5-décafluoropentane, sa teneur dans la composition est supérieure à 25% en poids et à l'exception
(1) d'une composition constituée de 50% en poids de 1,1,1,2,3,4,4,5,5,5-décafluoropentane et de 50% en poids de 1,1,1,3,3-pentafluorobutane;
(2) d'une composition constituée de 40% en poids de 1,1,1,2,3,4,4,5,5,5-décafluoropentane 40% en poids de 1,1,1,3,3-pentafluorobutane et de 20% en poids de méthanol.

3. Compositions selon la revendication 1 ou 2 comprenant en outre au moins un solvant organique non fluoré.

4. Compositions comprenant
(a) du 1,1,1,3,3-pentafluorobutane;
(b) plus de 5% en poids d'au moins un composé fluoré ininflammable qui ne présente pas de point d'éclair déterminé selon la norme ISO 1523, sélectionné parmi les hydrofluorocarbures comprenant au moins 5 atomes de carbone, les perfluorocarbures, les aminés fluorées et les éthers fluorées et
(c) en outre un solvant organique non-fluoré sélectionné parmi les hydrocarbures, les hydrocarbures halogénés, les esters ou cétones aliphatiques, alicycliques ou aromatiques, les alcools comprenant 2, 3, 4, 5, 6, 7, 8, 9 ou 10 atomes de carbone ou les éthers linéaires ou ramifiés comprenant 4, 5, 6, 7, 8 ou 9 atomes de carbone du les éthers cycliques comprenant 5,6, 7, 8 ou 9 atomes de carbone ou le tétrahydrofuranne.

5. Compositions selon la revendication 3 ou 4 dans lesquelles le solvant organique non fluoré est sélectionné parmi les hydrocarbures.

6. Compositions selon la revendication 5 dans lesquelles les hydrocarbures sont choisis parmi les alcanes ou alcènes comprenant de 5 à 12 atomes de carbone.

7. Compositions selon la revendication 3 ou 4 dans lesquelles le solvant organique non fluoré est sélectionné parmi les hydrocarbures halogénés.

8. Compositions selon la revendication 7 dans lesquelles les hydrocarbures halogénés sont des alcanes chlorés choisis parmi le dichlorométhane, le trichlorométhane et le 1,2-dichloroéthane.

9. Compositions selon la revendication 7 dans lesquelles l'hydrocarbure halogéné est le trans-1,2-dichloroéthylène.

10. Compositions selon la revendication 3 ou 4 dans lesquelles le solvant organique non fluoré est sélectionné parmi les esters ou cétones aliphatiques, alicycliques ou aromatiques.

11. Compositions selon la revendication 10 dans lesquelles le solvant organique non fluoré est choisi parmi l'acétate d'éthyle, le butyrate d'éthyle et le caproate d'éthyle.

12. Compositions selon la revendication 10 dans lesquelles le solvant organique non fluoré est choisi parmi l'acétone, la 2-butanone, les 2- ou 3-pentanones, la méthylisobutylcétone, la diisopropylcétone, la cyclohexanone et l'acétophénone.

13. Compositions selon la revendication 3 dans lesquelles le solvant organique non fluoré est sélectionné parmi les alcools.

14. Compositions selon la revendication 13 dans lesquelles les alcools sont des alcanols choisis parmi le méthanol, l'éthanol, le n-propanol, l'isopropanol, le n-butanol, l'isobutanol et le tert.-butanol.

15. Compositions selon la revendication 4, dans lesquelles les alcools sont des alcanols choisis parmi l'éthanol, le n-propanol, l'isopropanol, le n-butanol, l'isobutanol et le tert.-butanol.

16. Compositions selon la revendication 14 ou 15 dans lesquelles l'alcanol est l'isobutanol.

17. Compositions selon la revendication 3 ou 4 dans lesquelles le solvant organique non fluoré est choisi parmi le diéthyléther, le méthyl-isopropyléther, le monométhyléther de diéthylèneglycol, le diméthyléther de diéthylèneglycol et le tétrahydrofuranne.

18. Compositions selon l'une quelconque des revendications 3 à 17, comprenant de 1 à 20% en poids de solvant organique non fluoré.

19. Compositions selon la revendication 18, comprenant de 2 à 10 % en poids de solvant organique non fluoré.

20. Compositions selon l'une quelconque des revendications 1 à 19, dans lesquelles le composé fluoré ininflammable est sélectionné parmi les hydrofluorocarbures linéaries, ramifiés ou cycliques comprenant 5, 6, 7, 8, 9 ou 10 atomes de carbone:

21. Compositions selon la revendication 20, comprenant du 1,1,1,2,3,4,4,5,5,5-décafluoropentane (HFC-43-10mee) à titre de composé fluoré ininflammable.

22. Compositions selon la revendication 21, comprenant de 40 à 70% en poids de 1,1,1,2,3,4,4,5,5,5-décafluoropentane.

23. Compositions selon l'une quelconque des revendications 1 à 19, dans lesquelles le composé fluoré ininflammable est sélectionné parmi les éthers fluorés et les amines fluorées ininflammables linéaires, ramifiés ou cycliques et contenant 3, 4, 5, 6, 7, 8, 9 ou 10 atomes de carbone.

24. Compositions selon la revendication 23, comprenant du perfluorobutyl-méthyl éther à titre de composé fluoré ininflammable.

25. Compositions selon la revendication 24, comprenant de 55 à 85% ou de 50 à 60% en poids de perfluorobutyl-méthyl éther.

26. Compositions selon l'une quelconque des revendications 1 à 19, dans lesquelles le composé fluoré ininflammable est sélectionné parmi les perfluorocarbures contenant 4, 5, 6, 7, 8, 9 ou 10 atomes de carbone.

27. Compositions selon la revendication 26, comprenant du perfluoropentane ou du perfluorohexane à titre de composé fluoré ininflammable.

28. Compositions selon la revendication 27 comprenant du 1,1,1,3,3-pentafluorobutane et au moins un perfluorocarbure choisi parmi le perfluorohexane et le perfluoropentane dans des proportions dans lesquelles ils forment un azéotrope ou un pseudo-azéotrope, ledit azéotrope ou pseudo-azéotrope étant constitué essentiellement de 40 à 80 % en poids de 1,1,1,3,3-pentafluorobutane et de 20 à 60 % en poids de perfluorohexane ou de 13 à 50 % en poids de 1,1,1,3,3-pentafluorobutane et de 50 à 87 % en poids de perfluoropentane.

29. Compositions selon l'une quelconque des revendications 1 à 28, contenant du composé fluoré ininflammable en quantité telle que ladite composition ne présente pas de point d'éclair déterminé selon la norme ISO 1523.

30. Compositions selon l'une quelconque des revendications 1 à 29, comprenant en outre un agent tensioactif.

31. Utilisation des compositions selon l'une quelconque des revendications 1 à 30, dans des applications solvant, agent de séchage, solvant de dégraissage ou agent de fixation de toneis.

32. Utilisation des compositions selon l'une quelconque des revendications 1 à 30, dans des applications réfrigérant ou fluide caloporteur.

33. Utilisation selon la revendication 31 ou 32 comme produit de remplacement du CFC-11 (trichlorofluorométhane) ou comme produit de remplacement du CFC-113 (1,1,2-trichlorotrifluoroéthane).

34. Utilisation d'une composition comprenant du 1,1,1,3,3-pentafluorobutane et plus de 25% en poids de 1,1,1,2,3,4,4,5,5,5-décafluoropentane comme solvant.

35. Utilisation selon la revendication 34, dans laquelle la teneur en 1,1,1,2,3,4,4,5,5,5-décafluoropentane dans la composition est de 40% à 70% en poids

## Patentansprüche (Patentansprüche für folgende(n) Vertragsstaat(en): AT, BE, CH, LI, CY, DK, FI, GR, IE, LU, MC, NL, PT, SE)

1. Zusammensetzungen, die 1,1,1,3,3-Pentafluorbutan und über 5 Gew.-% wenigstens einer nicht entflammbaren Fluorverbindung umfassen, die keinen Flammpunkt, bestimmt gemäß der Norm ISO1523, aufweist, ausgewählt unter den Fluorkohlenwasserstoffen die wenigstens 5 Kohlenstoffatome enthalten, den Perfluorkohlenstoffen, den fluorierten Aminen und den fluorierten Ethern.

2. Zusammensetzungen nach Anspruch 1, die zusätzlich wenigstens ein nicht fluoriertes organisches Lösungsmittel umfassen.

3. Zusammensetzungen nach Anspruch 2, worin das nicht fluorierte organische Lösungsmittel unter den Kohlenwasserstoffen ausgewählt ist.

4. Zusammensetzungen nach Anspruch 3, worin die Kohlenwasserstoffe unter den Alkanen oder Alkenen mit einem Gehalt an 5 bis 12 Kohlenstoffatomen ausgewählt sind.

5. Zusammensetzungen nach Anspruch 2, worin das organische nicht fluorierte Lösungsmittel unter den halogenierten Kohlenwasserstoffen ausgewählt ist.

6. Zusammensetzungen nach Anspruch 5, worin die halogenierten Kohlenwasserstoffe chlorierte Alkane sind, ausgewählt unter Dichlormethan, Trichlormethan und 1,2-Dichlorethan.

7. Zusammensetzungen nach Anspruch 5, worin der halogenierte Kohlenwasserstoff das trans-1,2-Dichlorethylen ist.

8. Zusammensetzungen nach Anspruch 2, worin das nicht fluorierte organische Lösungsmittel unter den aliphatischen, alicyclischen oder aromatischen Estern oder Ketonen ausgewählt ist.

9. Zusammensetzungen nach Anspruch 8, worin das nicht fluorierte organische Lösungsmittel unter Ethylacetat, Ethylbutyrat und Ethylcaproat ausgewählt ist.

10. Zusammensetzungen nach Anspruch 8, worin das nicht fluorierte organische Lösungsmittel unter Aceton, 2-Butanon, den 2- oder 3-Pentanonen, Methylisobutylketon, Diisopropylketon, Cyclohexanon und Acetophenon ausgewählt ist.

11. Zusammensetzungen nach Anspruch 2, worin das nicht fluorierte organische Lösungsmittel unter den Alkoholen ausgewählt ist.

12. Zusammensetzungen nach Anspruch 11, worin die Alkohole unter Methanol, Ethanol, n-Propanol, Isopropanol, n-Butanol, Isobutanol und tert.-Butanol ausgewählte Alkanole sind.

13. Zusammensetzungen nach Anspruch 12, worin das Alkanol Isobutanol ist.

14. Zusammensetzungen nach Anspruch 2, worin das nicht fluorierte organische Lösungsmittel unter den Ethern ausgewählt ist.

15. Zusammensetzungen nach Anspruch 14, worin die Ether unter den aliphatischen oder alicyclischen Ethern, ausgewählt unter Diethylether, Methylisopropylether, Diethylenglycolmonomethylether, Diethylenglycoldimethylether, Tetrahydrofuran und 1,4-Dioxan, ausgewählt sind.

16. Zusammensetzungen nach einem der Ansprüche 2 bis 15, umfassend 1 bis 20 Gew.-% an nicht fluoriertem organischem Lösungsmittel.

17. Zusammensetzungen nach Anspruch 16, umfassend 2 bis 10 Gew.-% an nicht fluoriertem organischem Lösungsmittel.

18. Zusammensetzungen nach einem der Ansprüche 1 bis 17, worin die nicht entflammbare fluorierte Verbindung unter geraden, verzweigten oder cyclischen Hydrofluorkohlenstoffen mit einem Gehalt an 5, 6, 7, 8, 9 oder 10 Kohlenstoffatomen ausgewählt ist.

19. Zusammensetzungen nach Anspruch 18, umfassend 1,1,1,2,3,4,4,5,5,5-Decafluorpentan (HFC-43-10mee) als nicht entflammbare fluorierte Verbindung.

20. Zusammensetzungen nach Anspruch 19, umfassend 40 bis 70 Gew.-% 1,1,1,2,3,4,4,5,5,5-Decafluorpentan.

21. Zusammensetzungen nach einem der Ansprüche 1 bis 17, worin die nicht entflammbare fluorierte Verbindung unter den geraden, verzweigten oder cyclischen, nicht entflammbaren fluorierten Ethern und fluorierten Aminen mit einem Gehalt an 3, 4, 5, 6, 7, 8, 9 oder 10 Kohlenstoffatomen ausgewählt ist.

22. Zusammensetzungen nach Anspruch 21, umfassend Perfluorbutylmethylether als nicht entflammbare fluorierte Verbindung.

23. Zusammensetzungen nach Anspruch 22, umfassend 55 bis 85 oder 50 bis 60 Gew.-% Perfluorbutylmethylether.

24. Zusammensetzungen nach einem der Ansprüche 1 bis 17, worin die nicht entflammbare fluorierte Verbindung unter den Perfluorkohlenstoffen mit einem Gehalt an 4, 5, 6, 7, 8, 9 oder 10 Kohlenstoffatomen ausgewählt ist.

25. Zusammensetzungen nach Anspruch 24, umfassend Perfluorpentan oder Perfluorhexan als nicht entflammbare fluorierte Verbindung.

26. Zusammensetzungen nach Anspruch 25, umfassend 1,1,1,3,3-Pentafluorbutan und wenigstens einen Perfluorkohlenstoff, ausgewählt unter Perfluorhexan und Perfluorpentan in solchen Verhältnissen, unter denen sie ein Azeotrop oder ein Pseudoazeotrop ausbilden, wobei das Azeotrop oder Pseudoazeotrop im wesentlichen aus 40 bis 80 Gew.-% 1,1,1,3,3-Pentafluorbutan und 20 bis 60 Gew.-% Perfluorhexan oder aus 13 bis 50 Gew.-% 1,1,1,3,3-Pentafluorbutan und 50 bis 87 Gew.-% Perfluorpentan besteht.

27. Zusammensetzungen nach einem der Ansprüche 1 bis 26, mit einem Gehalt an der nicht entflammbaren fluorierten Verbindung in einer solchen Menge, daß die Zusammensetzung keinen Flammpunkt aufweist, bestimmt gemäß der Norm ISO 1523.

28. Zusammensetzungen nach einem der Ansprüche 1 bis 27, die zusätzlich ein grenzflächenaktives Mittel umfassen.

29. Verwendung der Zusammensetzungen nach einem der Ansprüche 1 bis 28 in Lösungsmittelanwendungen, als Trocknungsmittel, Entfettungsmittel oder Tonerfixierungsmittel.

30. Verwendung der Zusammensetzungen nach einem der Ansprüche 1 bis 28 in Anwendungen zum Kühlen oder als Wärmeträgerfluid.

31. Verwendung nach Anspruch 29 oder 30 als Ersatzprodukt für CFC-11 (Trichlorfluormethan) oder als Ersatzprodukt für CFC-113 (1,1,2-Trichlortrifluorethan).

## Patentansprüche (Patentansprüche für folgende(n) Vertragsstaat(en): DE, FR, GB, IT)

1. Zusammensetzungen, die 1,1,1,3,3-Pentafluorbutan und über 5 Gew.-% wenigstens einer nicht entflammbaren Fluorverbindung umfassen, die keinen Flammpunkt, bestimmt gemäß der Norm ISO 1523, aufweist, ausgewählt unter den Fluorkohlenwasserstoffen die wenigstens 5 Kohlenstoffatome enthalten, den Perfluorkohlenstoffen, den fluorierten Aminen und den fluorierten Ethern, ausgenommen
(1) azeotrope oder quasi-azeotrope Zusammensetzungen mit einem Gehalt an bis zu 25 Gew.-% 1,1,1,2,3,4,4,5,5,5-Decafluorpentan und an mindestens 75 Gew.-% 1,1,1,3,3-Pentafluorbutan, die keinen Flammpunkt, bestimmt gemäß der Norm ASTM D3 828, aufweisen;
(2) eine Zusammensetzung, bestehend aus 50 Gew.-% 1,1,1,2,3,4,4,5,5,5-Decafluorpentan und 50 Gew.-% 1,1,1,3,3-Pentafluorbutan;
(3) eine Zusammensetzung, bestehend aus 40 Gew.-% 1,1,1,2,3,4,4,5,5,5-Decafluorpentan, 40 Gew.-% 1,1,1,3,3-Pentafluorbutan und 20 Gew.-% Methanol;
(4) Zusammensetzungen, die im wesentlichen aus bis zu 99 Gew.-% Difluormethoxy(bisdifluormethylether) und aus wenigstens 1 Gew.-% 1,1,1,3,3-Pentafluorbutan bestehen;
(5) Zusammensetzungen, die im wesentlichen aus bis zu 99 Gew.-% Difluormethoxy(bisdifluormethylether) und aus wenigstens 1 Gew.-% 1,1,1,3,3-Pentafluorbutan bestehen, worin bis zu 40 Gew.-% Difluormethoxy(bisdifluormethylether) durch 1-Difluormethoxy-1,1,2,2-tetrafluorethyldifluormethylether ersetzt sein können;
(6) Zusammensetzungen, die im wesentlichen aus bis zu 64 Gew.-% Difluormethoxy(bisdifluormethylether), wenigstens 1 Gew.-% 1,1,1,3,3-Pentafluorbutan und 1 bis 35% eines Kohlenwasserstoffes bestehen;
(7) Zusammensetzungen, die im wesentlichen aus bis zu 89 Gew.-% Difluormethoxy(bisdifluormethylether), wenigstens 1 Gew.-% 1,1,1,3,3-Pentafluorbutan und aus 1 bis 10 Gew.-% eines Alkohols bestehen.

2. Zusammensetzungen, die 1,1,1,3,3-Pentafluorbutan und über 5 Gew.-% wenigstens einer nicht entflammbaren fluorierten Verbindung umfassen, die keinen Flammpunkt, bestimmt gemäß der Norm ISO 1523, aufweist, ausgewählt unter den Fluorkohlenwasserstoffen die wenigstens 5 Kohlenstoffatome enthalten, den Perfluorkohlenstoffen, den fluorierten Aminen und den fluorierten Ethern, mit der Maßgabe, daß dann, wenn die nicht entflammbare fluorierte Verbindung das 1,1,1,2,3,4,4,5,5,5-Decafluorpentan ist, sein Gehalt in der Zusammensetzung über 25 Gew.-% beträgt, und ausgenommen
(1) eine Zusammensetzung, die zu 50 Gew.-% aus 1,1,1,2,3,4,4,5,5,5-Decafluorpentan und zu 50 Gew.-% aus 1,1,1,3,3-Pentafluorbutan besteht;
(2) eine Zusammensetzung, die zu 40 Gew.-% aus 1,1,1,2,3,4,4,5,5,5-Decafluorpentan, 40 Gew.-% aus 1,1,1,3,3-Pentafluorbutan und zu 20 Gew.-% aus Methanol besteht;
(3) Zusammensetzungen, die im wesentlichen aus bis zu 99 Gew.-% Difluormethoxy(bisdifluormethylether) und aus wenigstens 1 Gew.-% 1,1,1,3,3-Pentafluorbutan bestehen;
(4) Zusammensetzungen, die im wesentlichen aus bis zu 99 Gew.-% Difluormethoxy(bisdifluormethylether) und aus wenigstens 1 Gew.-% 1,1,1,3,3-Pentafluorbutan bestehen, worin bis zu 40 Gew.-% Difluormethoxy(bisdifluormethylether) durch 1-Difluormethoxy-1,1,2,2-tetrafluorethyldifluormethylether ersetzt sein können;
(5) Zusammensetzungen, die im wesentlichen aus bis zu 64 Gew.-% Difluormethoxy(bisdifluormethylether), wenigstens 1 Gew.-% 1,1,1,3,3-Pentafluorbutan und 1 bis 35% eines Kohlenwasserstoffes bestehen;
(6) Zusammensetzungen, die im wesentlichen aus bis zu 89 Gew.-% Difluormethoxy(bisdifluormethylether), wenigstens 1 Gew.-% 1,1,1,3,3-Pentafluorbutan und aus 1 bis 10 Gew.-% eines Alkohols bestehen.

3. Zusammensetzungen nach Anspruch 1 oder 2, die zusätzlich wenigstens ein organisches nicht fluoriertes Lösungsmittel umfassen.

4. Zusammensetzungen, umfassend
(a) 1,1,1,3,3-Pentafluorbutan;
(b) über 5 Gew.-% wenigstens einer nicht entflammbaren fluorierten Verbindung, die keinen Flammpunkt, bestimmt gemäß der Norm ISO 1523, aufweist, ausgewählt unter den Fluorkohlenwasserstoffen die wenigstens 5 Kohlenstoffatome enthalten, den Perfluorkohlenstoffen, den fluorierten Aminen und den fluorierten Ethern und
(c) überdies ein nicht fluoriertes organisches Lösungsmittel, ausgewählt unter den Kohlenwasserstoffen mit 3, 4, 6, 7, 8, 9, 10, 11 oder 12 Kohlenstoffatomen, den halogenierten Kohlenwasserstoffen, den aliphatischen, alicyclischen oder aromatischen Estern oder Ketonen, den Alkoholen mit einem Gehalt an 2, 3, 4, 5, 6, 7, 8, 9 oder 10 Kohlenstoffatomen oder den geraden oder verzweigten Ethern mit einem Gehalt an 4, 5, 6, 7, 8 oder 9 Kohlenstoffatomen oder den cyclischen Ethern mit einem Gehalt an 5, 6, 7, 8 oder 9 Kohlenstoffatomen oder Tetrahydrofuran.

5. Zusammensetzungen nach Anspruch 3 oder 4, worin das nicht fluorierte organische Lösungsmittel unter den Kohlenwasserstoffen mit einem Gehalt an 3, 4, 6, 7, 8, 9, 10, 11 oder 12 Kohlenstoffatomen ausgewählt ist.

6. Zusammensetzungen nach Anspruch 5, worin die Kohlenwasserstoffe unter den Alkanen mit einem Gehalt an 6, 7, 8, 9, 10, 11 oder 12 Kohlenstoffatome ausgewählt sind.

7. Zusammensetzungen nach Anspruch 3 oder 4, worin das organische nicht fluorierte Lösungsmittel unter den halogenierten Kohlenwasserstoffen ausgewählt ist.

8. Zusammensetzungen nach Anspruch 7, worin die halogenierten Kohlenwasserstoffe chlorierte Alkane sind, ausgewählt unter Dichlormethan, Trichlormethan und 1,2-Dichlorethan.

9. Zusammensetzungen nach Anspruch 7, worin der halogenierte Kohlenwasserstoff das trans-1,2-Dichlorethylen ist.

10. Zusammensetzungen nach Anspruch 3 oder 4, worin das nicht fluorierte organische Lösungsmittel unter den aliphatischen, alicyclischen oder aromatischen Estern oder Ketonen ausgewählt ist.

11. Zusammensetzungen nach Anspruch 10, worin das nicht fluorierte organische Lösungsmittel unter Ethylacetat, Ethylbutyrat und Ethylcaproat ausgewählt ist.

12. Zusammensetzungen nach Anspruch 10, worin das nicht fluorierte organische Lösungsmittel unter Aceton, 2-Butanon, den 2- oder 3-Pentanonen, Methylisobutylketon, Diisopropylketon, Cyclohexanon und Acetophenon ausgewählt ist.

13. Zusammensetzungen nach Anspruch 3, worin das nicht fluorierte organische Lösungsmittel unter den Alkoholen ausgewählt ist.

14. Zusammensetzungen nach Anspruch 13, worin die Alkohole unter Methanol, Ethanol, n-Propanol, Isopropanol, n-Butanol, Isobutanol und tert.-Butanol ausgewählte Alkanole sind.

15. Zusammensetzungen nach Anspruch 4, worin die Alkohole unter Ethanol, n-Propanol, Isopropanol, n-Butanol, Isobutanol und tert.-Butanol ausgewählte Alkanole sind.

16. Zusammensetzungen nach Anspruch 14 oder 15, worin das Alkanol Isobutanol ist.

17. Zusammensetzungen nach Anspruch 3 oder 4, worin das nicht fluorierte organische Lösungsmittel unter den aliphatischen oder alicyclischen Ethern, ausgewählt unter Diethylether, Methylisopropylether, Diethylenglycolmonomethylether, Diethylenglycoldimethylether und Tetrahydrofuran, ausgewählt ist.

18. Zusammensetzungen nach einem der Ansprüche 3 bis 17, umfassend 1 bis 20 Gew.-% an nicht fluoriertem organischem Lösungsmittel.

19. Zusammensetzungen nach Anspruch 18, umfassend 2 bis 10 Gew.-% an nicht fluoriertem organischem Lösungsmittel.

20. Zusammensetzungen nach einem der Ansprüche 1 bis 19, worin die nicht entflammbare fluorierte Verbindung unter geraden, verzweigten oder cyclischen Hydrofluorkohlenstoffen mit einem Gehalt an 5, 6, 7, 8, 9 oder 10 Kohlenstoffatomen ausgewählt ist.

21. Zusammensetzungen nach Anspruch 20, umfassend 1,1,1,2,3,4,4,5,5,5-Decafluorpentan (HFC-43-10mee) als nicht entflammbare fluorierte Verbindung.

22. Zusammensetzungen nach Anspruch 21, umfassend 40 bis 70 Gew.-% 1,1,1,2,3,4,4,5,5,5-Decafluorpentan.

23. Zusammensetzungen nach einem der Ansprüche 1 bis 19, worin die nicht entflammbare fluorierte Verbindung unter den geraden, verzweigten oder cyclischen, nicht entflammbaren fluorierten Ethern und fluorierten Aminen mit einem Gehalt an 3, 4, 5, 6, 7, 8, 9 oder 10 Kohlenstoffatomen ausgewählt ist.

24. Zusammensetzungen nach Anspruch 23, umfassend Perfluorbutylmethylether als nicht entflammbare fluorierte Verbindung.

25. Zusammensetzungen nach Anspruch 24, umfassend 55 bis 85 oder 50 bis 60 Gew.-% Perfluorbutylmethylether.

26. Zusammensetzungen nach einem der Ansprüche 1 bis 19, worin die nicht entflammbare fluorierte Verbindung unter den Perfluorkohlenstoffen mit einem Gehalt an 4, 5, 6, 7, 8, 9 oder 10 Kohlenstoffatomen ausgewählt ist.

27. Zusammensetzungen nach Anspruch 26, umfassend Perfluorpentan oder Perfluorhexan als nicht entflammbare fluorierte Verbindung.

28. Zusammensetzungen nach Anspruch 27, umfassend 1,1,1,3,3-Pentafluorbutan und wenigstens einen Perfluorkohlenstoff, ausgewählt unter Perfluorhexan und Perfluorpentan in solchen Verhältnissen, unter denen sie ein Azeotrop oder ein Pseudoazeotrop ausbilden, wobei das Azeotrop oder Pseudoazeotrop im wesentlichen aus 40 bis 80 Gew.-% 1,1,1,3,3-Pentafluorbutan und 20 bis 60 Gew.-% Perfluorhexan oder aus 13 bis 50 Gew.-% 1,1,1,3,3-Pentafluorbutan und 50 bis 87 Gew.-% Perfluorpentan besteht.

29. Zusammensetzungen nach einem der Ansprüche 1 bis 28, mit einem Gehalt an der nicht entflammbaren fluorierten Verbindung in einer solchen Menge, daß die Zusammensetzung keinen Flammpunkt aufweist, bestimmt gemäß der Norm ISO 1523.

30. Zusammensetzungen nach einem der Ansprüche 1 bis 29, die zusätzlich ein grenzflächenaktives Mittel umfassen.

31. Verwendung der Zusammensetzungen nach einem der Ansprüche 1 bis 30 in Lösungsmittelanwendungen, als Trocknungsmittel, Entfettungsmittel oder Tonerfixierungsmittel.

32. Verwendung der Zusammensetzungen nach einem der Ansprüche 1 bis 30 in Anwendungen zum Kühlen oder als Wärmeträgerfluid.

33. Verwendung nach Anspruch 31 oder 32 als Ersatzprodukt für CFC-11 (Trichlorfluormethan) oder als Ersatzprodukt für CFC-113 (1,1,2-Trichlortrifluorethan).

34. Verwendung einer Zusammensetzung, die 1,1,1,3,3-Pentafluorbutan und über 25 Gew.-% 1,1,1,2,3,4,4,5,5,5-Decafluorpentan umfaßt, als Lösungsmittel.

35. Verwendung nach Anspruch 34, worin der Gehalt an 1,1,1,2,3,-4,4,5,5,5-Decafluorpentan in der Zusammensetzung 40 bis 70 Gew.-% beträgt.

## Patentansprüche (Patentansprüche für folgende(n) Vertragsstaat(en): ES)

1. Zusammensetzungen, die 1,1,1,3,3-Pentafluorbutan und über 5 Gew.-% wenigstens einer nicht entflammbaren Fluorverbindung umfassen, die keinen Flammpunkt, bestimmt gemäß der Norm ISO 1523, aufweist, ausgewählt unter den Fluorkohlenwasserstoffen die wenigstens 5 Kohlenstoffatome enthalten, den Perfluorkohlenstoffen, den fluorierten Aminen und den fluorierten Ethern, ausgenommen
(1) azeotrope oder quasi-azeotrope Zusammensetzungen mit einem Gehalt an bis zu 25 Gew.-% 1,1,1,2,3,4,4,5,5,5-Decafluorpentan und an mindestens 75 Gew.-% 1,1,1,3,3-Pentafluorbutan, die keinen Flammpunkt, bestimmt gemäß der Norm ASTM D3 828, aufweisen;
(2) eine Zusammensetzung, bestehend aus 50 Gew.-% 1,1,1,2,3,4,4,5,5,5-Decafluorpentan und 50 Gew.-% 1,1,1,3,3-Pentafluorbutan;
(3) eine Zusammensetzung, bestehend aus 40 Gew.-% 1,1,1,2,-3,4,4,5,5,5-Decafluorpentan, 40 Gew.-% 1,1,1,3,3-Pentafluorbutan und 20 Gew.-% Methanol.

2. Zusammensetzungen, die 1,1,1,3,3-Pentafluorbutan und über 5 Gew.-% wenigstens einer nicht entflammbaren Fluorverbindung umfassen, die keinen Flammpunkt, bestimmt gemäß der Norm ISO 1523, aufweist, ausgewählt unter den Fluorkohlenwasserstoffen die wenigstens 5 Kohlenstoffatome enthalten, den Perfluorkohlenstoffen, den fluorierten Aminen und den fluorierten Ethem, mit der Maßgabe, daß dann, wenn die nicht entflammbare fluorierte Verbindung das 1,1,1,2,3,4,4,5,5,5-Decafluorpentan ist, sein Gehalt in der Zusammensetzung über 25 Gew.-% beträgt, und ausgenommen
(1) eine Zusammensetzung, die zu 50 Gew.-% aus 1,1,1,2,3,4,4,5,5,5-Decafluorpentan und zu 50 Gew.-% aus 1,1,1,3,3-Pentafluorbutan besteht;
(2) eine Zusammensetzung, die zu 40 Gew.-% aus 1,1,1,2,3,4,4,5,5,5-Decafluorpentan, 40 Gew.-% aus 1,1,1,3,3-Pentafluorbutan und zu 20 Gew.-% aus Methanol besteht.

3. Zusammensetzungen nach Anspruch 1 oder 2, die zusätzlich wenigstens ein organisches nicht fluoriertes Lösungsmittel umfassen.

4. Zusammensetzungen, umfassend
(a) 1,1,1,3,3-Pentafluorbutan;
(b) über 5 Gew.-% wenigstens einer nicht entflammbaren fluorierten Verbindung, die keinen Flammpunkt, bestimmt gemäß der Norm ISO 1523, aufweist, ausgewählt unter den Fluorkohlenwasserstoffen die wenigstens 5 Kohlenstoffatome enthalten, den Perfluorkohlenstoffen, den fluorierten Aminen und den fluorierten Ethern und
(c) überdies ein nicht fluoriertes organisches Lösungsmittel, ausgewählt unter Kohlenwasserstoffen, halogenierten Kohlenwasserstoffen, aliphatischen, alicyclischen oder aromatischen Estern oder Ketonen, Alkoholen mit einem Gehalt an 2, 3, 4, 5, 6, 7, 8, 9 oder 10 Kohlenstoffatomen oder geraden oder verzweigten Ethem mit einem Gehalt an 4, 5, 6, 7, 8 oder 9 Kohlenstoffatomen oder cyclischen Ethern mit einem Gehalt an 5, 6, 7, 8 oder 9 Kohlenstoffatomen oder Tetrahydrofuran.

5. Zusammensetzungen nach Anspruch 3 oder 4, worin das nicht fluorierte organische Lösungsmittel unter Kohlenwasserstoffen ausgewählt ist.

6. Zusammensetzungen nach Anspruch 5, worin die Kohlenwasserstoffe unter den Alkanen oder Alkenen mit einem Gehalt an 5 bis 12 Kohlenstoffatomen ausgewählt sind.

7. Zusammensetzungen nach Anspruch 3 oder 4, worin das organische nicht fluorierte Lösungsmittel unter den halogenierten Kohlenwasserstoffen ausgewählt ist.

8. Zusammensetzungen nach Anspruch 7, worin die halogenierten Kohlenwasserstoffe chlorierte Alkane sind, ausgewählt unter Dichlormethan, Trichlormethan und 1,2-Dichlorethan.

9. Zusammensetzungen nach Anspruch 7, worin der halogenierte Kohlenwasserstoff das trans-1,2-Dichlorethylen ist.

10. Zusammensetzungen nach Anspruch 3 oder 4, worin das nicht fluorierte organische Lösungsmittel unter den aliphatischen, alicyclischen oder aromatischen Estern oder Ketonen ausgewählt ist.

11. Zusammensetzungen nach Anspruch 10, worin das nicht fluorierte organische Lösungsmittel unter Ethylacetat, Ethylbutyrat und Ethylcaproat ausgewählt ist.

12. Zusammensetzungen nach Anspruch 10, worin das nicht fluorierte organische Lösungsmittel unter Aceton, 2-Butanon, den 2- oder 3-Pentanonen, Methylisobutylketon, Diisopropylketon, Cyclohexanon und Acetophenon ausgewählt ist.

13. Zusammensetzungen nach Anspruch 3, worin das nicht fluorierte organische Lösungsmittel unter den Alkoholen ausgewählt ist.

14. Zusammensetzungen nach Anspruch 13, worin die Alkohole unter Methanol, Ethanol, n-Propanol, Isopropanol, n-Butanol, Isobutanol und tert.-Butanol ausgewählte Alkanole sind.

15. Zusammensetzungen nach Anspruch 4, worin die Alkohole unter Ethanol, n-Propanol, Isopropanol, n-Butanol, Isobutanol und tert.-Butanol ausgewählte Alkanole sind.

16. Zusammensetzungen nach Anspruch 14 oder 15, worin das Alkanol Isobutanol ist.

17. Zusammensetzungen nach Anspruch 3 oder 4, worin das nicht fluorierte organische Lösungsmittel unter Diethylether, Methylisopropylether, Diethylenglycolmonomethylether, Diethylenglycoldimethylether und Tetrahydrofuran ausgewählt ist.

18. Zusammensetzungen nach einem der Ansprüche 3 bis 17, umfassend 1 bis 20 Gew.-% an nicht fluoriertem organischem Lösungsmittel.

19. Zusammensetzungen nach Anspruch 18, umfassend 2 bis 10 Gew.-% an nicht fluoriertem organischem Lösungsmittel.

20. Zusammensetzungen nach einem der Ansprüche 1 bis 19, worin die nicht entflammbare fluorierte Verbindung unter geraden, verzweigten oder cyclischen Hydrofluorkohlenstoffen mit einem Gehalt an 5, 6, 7, 8, 9 oder 10 Kohlenstoffatomen ausgewählt ist.

21. Zusammensetzungen nach Anspruch 20, umfassend 1,1,1,2,3,4,-4,5,5,5-Decafluorpentan (HFC-43-10mee) als nicht entflammbare fluorierte Verbindung.

22. Zusammensetzungen nach Anspruch 21, umfassend 40 bis 70 Gew.-% 1,1,1,2,3,4,4,5,5,5-Decafluorpentan.

23. Zusammensetzungen nach einem der Ansprüche 1 bis 19, worin die nicht entflammbare fluorierte Verbindung unter den geraden, verzweigten oder cyclischen, nicht entflammbaren fluorierten Ethern und fluorierten Aminen mit einem Gehalt an 3, 4, 5, 6, 7, 8; 9 oder 10 Kohlenstoffatomen ausgewählt ist.

24. Zusammensetzungen nach Anspruch 23, umfassend Perfluorbutylmethylether als nicht entflammbare fluorierte Verbindung.

25. Zusammensetzungen nach Anspruch 24, umfassend 55 bis 85 oder 50 bis 60 Gew.-% Perfluorbutylmethylether.

26. Zusammensetzungen nach einem der Ansprüche 1 bis 19, worin die nicht entflammbare fluorierte Verbindung unter den Perfluorkohlenstoffen mit einem Gehalt an 4, 5, 6, 7, 8, 9 oder 10 Kohlenstoffatomen ausgewählt ist.

27. Zusammensetzungen nach Anspruch 26, umfassend Perfluorpentan oder Perfluorhexan als nicht entflammbare fluorierte Verbindung.

28. Zusammensetzungen nach Anspruch 27, umfassend 1,1,1,3,3-Pentafluorbutan und wenigstens einen Perfluorkohlenstoff, ausgewählt unter Perfluorhexan und Perfluorpentan in solchen Verhältnissen, unter denen sie ein Azeotrop oder ein Pseudoazeotrop ausbilden, wobei das Azeotrop oder Pseudoazeotrop im wesentlichen aus 40 bis 80 Gew.-% 1,1,1,3,3-Pentafluorbutan und 20 bis 60 Gew.-% Perfluorhexan oder aus 13 bis 50 Gew.-% 1,1,1,3,3-Pentafluorbutan und 50 bis 87 Gew.-% Perfluorpentan besteht.

29. Zusammensetzungen nach einem der Ansprüche 1 bis 28, mit einem Gehalt an der nicht entflammbaren fluorierten Verbindung in einer solchen Menge, daß die Zusammensetzung keinen Flammpunkt aufweist, bestimmt gemäß der Norm ISO 1523.

30. Zusammensetzungen nach einem der Ansprüche 1 bis 29, die zusätzlich ein grenzflächenaktives Mittel umfassen.

31. Verwendung der Zusammensetzungen nach einem der Ansprüche 1 bis 30 in Lösungsmittelanwendungen, als Trocknungsmittel, Entfettungsmittel oder Tonerfixierungsmittel.

32. Verwendung der Zusammensetzungen nach einem der Ansprüche 1 bis 30 in Anwendungen zum Kühlen oder als Wärmeträgerfluid.

33. Verwendung nach Anspruch 31 oder 32 als Ersatzprodukt für CFC-11 (Trichlorfluormethan) oder als Ersatzprodukt für CFC-113 (1,1,2-Trichlortrifluorethan).

34. Verwendung einer Zusammensetzung, die 1,1,1,3,3-Pentafluorbutan und über 25 Gew.-% 1,1,1,2,3,4,4,5,5,5-Decafluorpentan umfaßt, als Lösungsmittel.

35. Verwendung nach Anspruch 34, worin der Gehalt an 1,1,1,2,3,-4,4,5,5,5-Decafluorpentan in der Zusammensetzung 40 bis 70 Gew.-% beträgt.

## Claims (Claims for the following Contracting State(s): AT, BE, CH, LI, CY, DK, FI, GR, IE, LU, MC, NL, PT, SE)

1. Compositions comprising 1,1,1,3,3-pentafluorobutane and more than 5% by weight of at least one nonflammable fluorinated compound which does not exhibit a flash point determined according to Standard ISO 1523 and which is selected from hydrofluorocarbons comprising at least 5 carbon atoms, perfluorocarbons, fluorinated amines and fluorinated ethers.

2. Compositions according to Claim 1, additionally comprising at least one nonfluorinated organic solvent.

3. Compositions according to Claim 2, in which the nonfluorinated organic solvent is selected from hydrocarbons.

4. Compositions according to Claim 3, in which the hydrocarbons are chosen from alkanes or alkenes comprising from 5 to 12 carbon atoms.

5. Compositions according to Claim 2, in which the nonfluorinated organic solvent is selected from halogenated hydrocarbons.

6. Compositions according to Claim 5, in which the halogenated hydrocarbons are chlorinated alkanes chosen from dichloromethane, trichloromethane and 1,2-dichloroethane.

7. Compositions according to Claim 5, in which the halogenated hydrocarbon is trans-1,2-dichloroethylene.

8. Compositions according to Claim 2, in which the nonfluorinated organic solvent is selected from aliphatic, alicyclic or aromatic esters or ketones.

9. Compositions according to Claim 8, in which the nonfluorinated organic solvent is chosen from ethyl acetate, ethyl butyrate and ethyl caproate.

10. Compositions according to Claim 8, in which the nonfluorinated organic solvent is chosen from acetone, 2-butanone, 2- or 3-pentanones, methyl isobutyl ketone, diisopropyl ketone, cyclohexanone and acetophenone.

11. Compositions according to Claim 2, in which the nonfluorinated organic solvent is selected from alcohols.

12. Compositions according to Claim 11, in which the alcohols are alkanols chosen from methanol, ethanol, n-propanol, isopropanol, n-butanol, isobutanol and tert-butanol.

13. Compositions according to Claim 12, in which the alkanol is isobutanol.

14. Compositions according to Claim 2, in which the nonfluorinated organic solvent is selected from ethers.

15. Compositions according to Claim 14, in which the ethers are chosen from aliphatic or alicyclic ethers selected from diethyl ether, methyl isopropyl ether, diethylene glycol monomethyl ether, diethylene glycol dimethyl ether, tetrahydrofuran and 1,4-dioxane.

16. Compositions according to any one of Claims 2 to 15, comprising from 1 to 20% by weight of nonfluorinated organic solvent.

17. Compositions according to Claim 16, comprising from 2 to 10% by weight of nonfluorinated organic solvent.

18. Compositions according to any one of Claims 1 to 17, in which the nonflammable fluorinated compound is selected from linear, branched or cyclic hydrofluorocarbons comprising 5, 6, 7, 8, 9 or 10 carbon atoms.

19. Compositions according to Claim 18, comprising 1,1,1,2,3,4,4,5,5,5-decafluoropentane (HFC-43-10mee) as nonflammable fluorinated compound.

20. Compositions according to Claim 19, comprising from 40 to 70% by weight of 1,1,1,2,3,4,4,5,5,5-decafluoropentane.

21. Compositions according to any one of Claims 1 to 17, in which the nonflammable fluorinated compound is selected from nonflammable linear, branched or cyclic fluorinated ethers and fluorinated amines comprising 3, 4, 5, 6, 7, 8, 9 or 10 carbon atoms.

22. Compositions according to Claim 21, comprising perfluorobutyl methyl ether as nonflammable fluorinated compound.

23. Compositions according to Claim 22, comprising from 55 to 85% or from 50 to 60% by weight of perfluorobutyl methyl ether.

24. Compositions according to any one of Claims 1 to 17, in which the nonflammable fluorinated compound is selected from perfluorocarbons comprising 4, 5, 6, 7, 8, 9 or 10 carbon atoms.

25. Compositions according to Claim 24, comprising perfluoropentane or perfluorohexane as nonflammable fluorinated compound.

26. Compositions according to Claim 25, comprising 1,1,1,3,3-pentafluorobutane and at least one perfluorocarbon chosen from perfluorohexane and perfluoropentane in proportions in which they form an azeotrope or a pseudoazeotrope, the said azeotrope or pseudoazeotrope being composed essentially of 40 to 80% by weight of 1,1,1,3,3-pentafluorobutane and of 20 to 60% by weight of perfluorohexane or of 13 to 50% by weight of 1,1,1,3,3-pentafluorobutane and of 50 to 87% by weight of perfluoropentane.

27. Compositions according to any one of Claims 1 to 26, comprising nonflammable fluorinated compound in an amount such that the said composition does not exhibit a flash point determined according to Standard ISO 1523.

28. Compositions according to any one of Claims 1 to 27, additionally comprising a surface-active agent.

29. Use of the compositions according to any one of Claims 1 to 28 in applications as solvent, drying agent, degreasing solvent or agent for fixing toners.

30. Use of the compositions according to any one of Claims 1 to 28 in applications as cooling agent or heat-transfer fluid.

31. Use according to Claim 29 or 30 as replacement product for CFC-11 (trichlorofluoromethane) or as replacement product for CFC-113 (1,1,2-trichlorotrifluoroethane).

## Claims (Claims for the following Contracting State(s): DE, FR, GB, IT)

1. Compositions comprising 1,1,1,3,3-pentafluorobutane and more than 5% by weight of at least one nonflammable fluorinated compound which does not exhibit a flash point determined according to Standard ISO 1523 and which is selected from hydrofluorocarbons comprising at least 5 carbon atoms, perfluorocarbons, fluorinated amines and fluorinated ethers, with the exception :
(1) of the azeotropic or quasiazeotropic compositions comprising up to 25% by weight of 1,1,1,2,3,4,4,5,5,5-decafluoropentane and at least 75% by weight of 1,1,1,3,3-pentafluorobutane not exhibiting a flash point determined according to Standard ASTM D 3828;
(2) of a composition composed of 50% by weight of 1,1,1,2,3,4,4,5,5,5-decafluoropentane and of 50% by weight of 1,1,1,3,3-pentafluorobutane;
(3) of a composition composed of 40% by weight of 1,1,1,2,3,4,4,5,5,5-decafluoropentane, of 40% by weight of 1,1,1,3,3-pentafluorobutane and of 20% by weight of methanol;
(4) of compositions composed essentially of up to 99% by weight of difluoromethoxy-(bisdifluoromethyl ether) and of at least 1% by weight of 1,1,1,3,3-pentafluorobutane;
(5) of compositions composed essentially of up to 99% by weight of difluoromethoxy-(bisdifluoromethyl ether) and of at least 1% by weight of 1,1,1,3,3-pentafluorobutane, in which compositions up to 40% by weight of difluoromethoxy-(bisdifluoromethyl ether) can be substituted by 1-difluoromethoxy-1,1,2,2-tetrafluoroethyl difluoromethyl ether;
(6) of compositions composed essentially of up to 64% by weight of difluoromethoxy-(bisdifluoromethyl ether), of at least 1% by weight of 1,1,1,3,3-pentafluorobutane and of 1 to 35% by weight of a hydrocarbon;
(7) of compositions composed essentially of up to 89% by weight of difluoromethoxy-(bisdifluoromethyl ether), of at least 1% by weight of 1,1,1,3,3-pentafluorobutane and of 1 to 10% by weight of an alcohol.

2. Compositions comprising 1,1,1,3,3-pentafluorobutane and more than 5% by weight of at least one nonflammable fluorinated compound which does not exhibit a flash point determined according to Standard ISO 1523 and which is selected from hydrofluorocarbons comprising at least 5 carbon atoms, perfluorocarbons, fluorinated amines and fluorinated ethers, with the proviso that, when the nonflammable fluorinated compound is 1,1,1,2,3,4,4,5,5,5-decafluoropentane, its content in the composition is greater than 25% by weight, and with the exception :
(1) of a composition composed of 50% by weight of 1,1,1,2,3,4,4,5,5,5-decafluoropentane and of 50% by weight of 1,1,1,3,3-pentafluorobutane;
(2) of a composition composed of 40% by weight of 1,1,1,2,3,4,4,5,5,5-decafluoropentane, of 40% by weight of 1,1,1,3,3-pentafluorobutane and of 20% by weight of methanol;
(3) of compositions composed essentially of up to 99% by weight of difluoromethoxy-(bisdifluoromethyl ether) and of at least 1% by weight of 1,1,1,3,3-pentafluorobutane;
(4) of compositions composed essentially of up to 99% by weight of difluoromethoxy-(bisdifluoromethyl ether) and of at least 1% by weight of 1,1,1,3,3-pentafluorobutane, in which compositions up to 40% by weight of the difluoromethoxy-(bisdifluoromethyl ether) is substituted by 1-difluoromethoxy-1,1,2,2-tetrafluoroethyl difluoromethyl ether;
(5) of compositions composed essentially of up to 64% by weight of difluoromethoxy-(bisdifluoromethyl ether), of at least 1% by weight of 1,1,1,3,3-pentafluorobutane and of 1 to 35% by weight of a hydrocarbon;
(6) of compositions composed essentially of up to 89% by weight of difluoromethoxy-(bisdifluoromethyl ether), of at least 1% by weight of 1,1,1,3,3-pentafluorobutane and of 1 to 10% by weight of an alcohol.

3. Compositions according to Claim 1 or 2, additionally comprising at least one nonfluorinated organic solvent.

4. Compositions comprising :
(a) 1,1,1,3,3-pentafluorobutane;
(b) more than 5% by weight of at least one nonflammable fluorinated compound which does not exhibit a flash point determined according to Standard ISO 1523 and which is selected from hydrofluorocarbons comprising at least 5 carbon atoms, perfluorocarbons, fluorinated amines and fluorinated ethers, and
(c) in addition, a nonfluorinated organic solvent selected from hydrocarbons comprising 3, 4, 6, 7, 8, 9, 10, 11 or 12 carbon atoms, halogenated hydrocarbons, aliphatic, alicyclic or aromatic esters or ketones, alcohols comprising 2, 3, 4, 5, 6, 7, 8, 9 or 10 carbon atoms or linear or branched ethers comprising 4, 5, 6, 7, 8 or 9 carbon atoms or cyclic ethers comprising 5, 6, 7, 8 or 9 carbon atoms or tetrahydrofuran.

5. Compositions according to Claim 3 or 4, in which the nonfluorinated organic solvent is selected from hydrocarbons comprising 3, 4, 6, 7, 8, 9, 10, 11 or 12 carbon atoms.

6. Compositions according to Claim 5, in which the hydrocarbons are chosen from alkanes comprising 6, 7, 8, 9, 10, 11 or 12 carbon atoms.

7. Compositions according to Claim 3 or 4, in which the nonfluorinated organic solvent is selected from halogenated hydrocarbons.

8. Compositions according to Claim 7, in which the halogenated hydrocarbons are chlorinated alkanes chosen from dichloromethane, trichloromethane and 1,2-dichloroethane.

9. Compositions according to Claim 7, in which the halogenated hydrocarbon is trans-1,2-dichloroethylene.

10. Compositions according to Claim 3 or 4, in which the nonfluorinated organic solvent is selected from aliphatic, alicyclic or aromatic esters or ketones.

11. Compositions according to Claim 10, in which the nonfluorinated organic solvent is chosen from ethyl acetate, ethyl butyrate and ethyl caproate.

12. Compositions according to Claim 10, in which the nonfluorinated organic solvent is chosen from acetone, 2-butanone, 2- or 3-pentanones, methyl isobutyl ketone, diisopropyl ketone, cyclohexanone and acetophenone.

13. Compositions according to Claim 3, in which the nonfluorinated organic solvent is selected from alcohols.

14. Compositions according to Claim 13, in which the alcohols are alkanols chosen from methanol, ethanol, n-propanol, isopropanol, n-butanol, isobutanol and tert-butanol.

15. Compositions according to Claim 4; in which the alcohols are alkanols chosen from ethanol, n-propanol, isopropanol, n-butanol, isobutanol and tert-butanol.

16. Compositions according to Claim 14 or 15, in which the alkanol is isobutanol.

17. Compositions according to Claim 3 or 4, in which the nonfluorinated organic solvent is chosen from aliphatic or alicyclic ethers selected from diethyl ether, methyl isopropyl ether, diethylene glycol monomethyl ether, diethylene glycol dimethyl ether and tetrahydrofuran.

18. Compositions according to any one of Claims 3 to 17, comprising from 1 to 20% by weight of nonfluorinated organic solvent.

19. Compositions according to Claim 18, comprising from 2 to 10% by weight of nonfluorinated organic solvent.

20. Compositions according to any one of Claims 1 to 19, in which the nonflammable fluorinated compound is selected from linear, branched or cyclic hydrofluorocarbons comprising 5, 6, 7, 8, 9 or 10 carbon atoms.

21. Compositions according to Claim 20, comprising 1,1,1,2,3,4,4,5,5,5-decafluoropentane (HFC-43-10mee) as nonflammable fluorinated compound.

22. Compositions according to Claim 21, comprising from 40 to 70% by weight of 1,1,1,2,3,4,4,5,5,5-decafluoropentane.

23. Compositions according to any one of Claims 1 to 19, in which the nonflammable fluorinated compound is selected from nonflammable linear, branched or cyclic fluorinated ethers and fluorinated amines comprising 3, 4, 5, 6, 7, 8, 9 or 10 carbon atoms.

24. Compositions according to Claim 23, comprising perfluorobutyl methyl ether as nonflammable fluorinated compound.

25. Compositions according to Claim 24, comprising from 55 to 85% or from 50 to 60% by weight of perfluorobutyl methyl ether.

26. Compositions according to any one of Claims 1 to 19, in which the nonflammable fluorinated compound is selected from perfluorocarbons comprising 4, 5, 6, 7, 8, 9 or 10 carbon atoms.

27. Compositions according to Claim 26, comprising perfluoropentane or perfluorohexane as nonflammable fluorinated compound.

28. Compositions according to Claim 27, comprising 1,1,1,3,3-pentafluorobutane and at least one perfluorocarbon chosen from perfluorohexane and perfluoropentane in proportions in which they form an azeotrope or a pseudoazeotrope, the said azeotrope or pseudoazeotrope being composed essentially of 40 to 80% by weight of 1,1,1,3,3-pentafluorobutane and of 20 to 60% by weight of perfluorohexane or of 13 to 50% by weight of 1,1,1,3,3-pentafluorobutane and of 50 to 87% by weight of perfluoropentane.

29. Compositions according to any one of Claims 1 to 28, comprising nonflammable fluorinated compound in an amount such that the said composition does not exhibit a flash point determined according to Standard ISO 1523.

30. Compositions according to any one of Claims 1 to 29, additionally comprising a surface-active agent.

31. Use of the compositions according to any one of Claims 1 to 30 in applications as solvent, drying agent, degreasing solvent or agent for fixing toners.

32. Use of the compositions according to any one of Claims 1 to 30 in applications as cooling agent or heat-transfer fluid.

33. Use according to Claim 31 or 32 as replacement product for CFC-11 (trichlorofluoromethane) or as replacement product for CFC-113 (1,1,2-trichlorotrifluoroethane).

34. Use of a composition comprising 1,1,1,3,3-pentafluorobutane and more than 25% by weight of 1,1,1,2,3,4,4,5,5,5-decafluoropentane as solvent.

35. Use according to Claim 34, in which the content of 1,1,1,2,3,4,4,5,5,5-decafluoropentane in the composition is from 40% to 70% by weight.

## Claims (Claims for the following Contracting State(s): ES)

1. Compositions comprising 1,1,1,3,3-pentafluorobutane and more than 5% by weight of at least one nonflammable fluorinated compound which does not exhibit a flash point determined according to Standard ISO 1523 and which is selected from hydrofluorocarbons comprising at least 5 carbon atoms, perfluorocarbons, fluorinated amines and fluorinated ethers, with the exception :
(1) of the azeotropic or quasiazeotropic compositions comprising up to 25% by weight of 1,1,1,2,3,4,4,5,5,5-decafluoropentane and at least 75% by weight of 1,1,1,3,3-pentafluorobutane not exhibiting a flash point determined according to Standard ASTM D 3828;
(2) of a composition composed of 50% by weight of 1,1,1,2,3,4,4,5,5,5-decafluoropentane and of 50% by weight of 1,1,1,3,3-pentafluorobutane;
(3) of a composition composed of 40% by weight of 1,1,1,2,3,4,4,5,5,5-decafluoropentane, of 40% by weight of 1,1,1,3,3-pentafluorobutane and of 20% by weight of methanol.

2. Compositions comprising 1,1,1,3,3-pentafluorobutane and more than 5% by weight of at least one nonflammable fluorinated compound which does not exhibit a flash point determined according to Standard ISO 1523 and which is selected from hydrofluorocarbons comprising at least 5 carbon atoms, perfluorocarbons, fluorinated amines and fluorinated ethers, with the proviso that, when the nonflammable fluorinated compound is 1,1,1,2,3,4,4,5,5,5-decafluoropentane, its content in the composition is greater than 25% by weight, and with the exception :
(1) of a composition composed of 50% by weight of 1,1,1,2,3,4,4,5,5,5-decafluoropentane and of 50% by weight of 1,1,1,3,3-pentafluorobutane;
(2) of a composition composed of 40% by weight of 1,1,1,2,3,4,4,5,5,5-decafluoropentane, of 40% by weight of 1,1,1,3,3-pentafluorobutane and of 20% by weight of methanol.

3. Compositions according to Claim 1 or 2, additionally comprising at least one nonfluorinated organic solvent.

4. Compositions comprising :
(a) 1,1,1,3,3-pentafluorobutane;
(b) more than 5% by weight of at least one nonflammable fluorinated compound which does not exhibit a flash point determined according to Standard ISO 1523 and which is selected from hydrofluorocarbons comprising at least 5 carbon atoms, perfluorocarbons, fluorinated amines and fluorinated ethers, and
(c) in addition, a nonfluorinated organic solvent selected from hydrocarbons, halogenated hydrocarbons, aliphatic, alicyclic or aromatic esters or ketones, alcohols comprising 2, 3, 4, 5, 6, 7, 8, 9 or 10 carbon atoms or linear or branched ethers comprising 4, 5, 6, 7, 8 or 9 carbon atoms or cyclic ethers comprising 5, 6, 7, 8 or 9 carbon atoms or tetrahydrofuran.

5. Compositions according to Claim 3 or 4, in which the nonfluorinated organic solvent is selected from hydrocarbons.

6. Compositions according to Claim 5, in which the hydrocarbons are chosen from alkanes or alkenes comprising from 5 to 12 carbon atoms.

7. Compositions according to Claim 3 or 4, in which the nonfluorinated organic solvent is selected from halogenated hydrocarbons.

8. Compositions according to Claim 7, in which the halogenated hydrocarbons are chlorinated alkanes chosen from dichloromethane, trichloromethane and 1,2-dichloroethane.

9. Compositions according to Claim 7, in which the halogenated hydrocarbon is trans-1,2-dichloroethylene.

10. Compositions according to Claim 3 or 4, in which the nonfluorinated organic solvent is selected from aliphatic, alicyclic or aromatic esters or ketones.

11. Compositions according to Claim 10, in which the nonfluorinated organic solvent is chosen from ethyl acetate, ethyl butyrate and ethyl caproate.

12. Compositions according to Claim 10, in which the nonfluorinated organic solvent is chosen from acetone, 2-butanone, 2- or 3-pentanones, methyl isobutyl ketone, diisopropyl ketone, cyclohexanone and acetophenone.

13. Compositions according to Claim 3, in which the nonfluorinated organic solvent is selected from alcohols.

14. Compositions according to Claim 13, in which the alcohols are alkanols chosen from methanol, ethanol, n-propanol, isopropanol, n-butanol, isobutanol and tert-butanol.

15. Compositions according to Claim 4, in which the alcohols are alkanols chosen from ethanol, n-propanol, isopropanol, n-butanol, isobutanol and tert-butanol.

16. Compositions according to Claim 14 or 15, in which the alkanol is isobutanol.

17. Compositions according to Claim 3 or 4, in which the nonfluorinated organic solvent is chosen from diethyl ether, methyl isopropyl ether, diethylene glycol monomethyl ether, diethylene glycol dimethyl ether and tetrahydrofuran.

18. Compositions according to any one of Claims 3 to 17, comprising from 1 to 20% by weight of nonfluorinated organic solvent.

19. Compositions according to Claim 18, comprising from 2 to 10% by weight of nonfluorinated organic solvent.

20. Compositions according to any one of Claims 1 to 19, in which the nonflammable fluorinated compound is selected from linear, branched or cyclic hydrofluorocarbons comprising 5, 6, 7, 8, 9 or 10 carbon atoms.

21. Compositions according to Claim 20, comprising 1,1,1,2,3,4,4,5,5,5-decafluoropentane (HFC-43-10mee) as nonflammable fluorinated compound.

22. Compositions according to Claim 21, comprising from 40 to 70% by weight of 1,1,1,2,3,4,4,5,5,5-decafluoropentane.

23. Compositions according to any one of Claims 1 to 19, in which the nonflammable fluorinated compound is selected from nonflammable linear, branched or cyclic fluorinated ethers and fluorinated amines comprising 3, 4, 5, 6, 7, 8, 9 or 10 carbon atoms.

24. Compositions according to Claim 23, comprising perfluorobutyl methyl ether as nonflammable fluorinated compound.

25. Compositions according to Claim 24, comprising from 55 to 85% or from 50 to 60% by weight of perfluorobutyl methyl ether.

26. Compositions according to any one of Claims 1 to 19, in which the nonflammable fluorinated compound is selected from perfluorocarbons comprising 4, 5, 6, 7, 8, 9 or 10 carbon atoms.

27. Compositions according to Claim 26, comprising perfluoropentane or perfluorohexane as nonflammable fluorinated compound.

28. Compositions according to Claim 27, comprising 1,1,1,3,3-pentafluorobutane and at least one perfluorocarbon chosen from perfluorohexane and perfluoropentane in proportions in which they form an azeotrope or a pseudoazeotrope, the said azeotrope or pseudoazeotrope being composed essentially of 40 to 80% by weight of 1,1,1,3,3-pentafluorobutane and of 20 to 60% by weight of perfluorohexane or of 13 to 50% by weight of 1,1,1,3,3-pentafluorobutane and of 50 to 87% by weight of perfluoropentane.

29. Compositions according to any one of Claims 1 to 28, comprising nonflammable fluorinated compound in an amount such that the said composition does not exhibit a flash point determined according to Standard ISO 1523.

30. Compositions according to any one of Claims 1 to 29, additionally comprising a surface-active agent.

31. Use of the compositions according to any one of Claims 1 to 30 in applications as solvent, drying agent, degreasing solvent or agent for fixing toners.

32. Use of the compositions according to any one of Claims 1 to 30 in applications as cooling agent or heat-transfer fluid.

33. Use according to Claim 31 or 32 as replacement product for CFC-11 (trichlorofluoromethane) or as replacement product for CFC-113 (1,1,2-trichlorotrifluoroethane).

34. Use of a composition comprising 1,1,1,3,3-pentafluorobutane and more than 25% by weight of 1,1,1,2,3,4,4,5,5,5-decafluoropentane as solvent.

35. Use according to Claim 34, in which the content of 1,1,1,2,3,4,4,5,5,5-decafluoropentane in the composition is from 40% to 70% by weight.
